# EUROPÄISCHE PATENTSCHRIFT

(11) **EP 4 330 137 B1**
(45) Veröffentlichungstag und Bekanntmachung des Hinweises auf die Patenterteilung: **08.10.2025**
(21) Anmeldenummer: 22726427.2
(22) Anmeldetag: 28.04.2022
(51) Int. Cl.: B64D 11/06, B64D 11/00

(54) **FLUGZEUGSITZANORDNUNG**
AIRCRAFT SEAT ASSEMBLY
ENSEMBLE SIÈGE D'AÉRONEF

(30) Priorität: 28.04.2021 DE 102021110957
(43) Veröffentlichungstag der Anmeldung: 06.03.2024
(73) Patentinhaber: Recaro Aircraft Seating GmbH & Co. KG, 74523 Schwäbisch Hall (DE)
(72) Erfinder: UDRISTE, Daniel, 74523 Schwaebisch Hall (DE); CHILCOTT, Christopher, 74523 Schwaebisch Hall (DE); THIELE, Maik, 70565 Stuttgart (DE); HOFFMANN, Hermann, 74523 Schwäbisch Hall (DE)
(74) Vertreter: Daub, Thomas
(86) Internationale Anmeldenummer: PCT/EP2022/061419
(87) Internationale Veröffentlichungsnummer: WO 2022/229357

(56) Entgegenhaltungen:
- EP-A2- 2 825 460
- WO-A1-2014/115107
- WO-A1-2019/179638
- WO-A1-2021/032954
- WO-A1-96/18537
- DE-A1- 102019 118 707
- GB-A- 2 362 095
- US-A1- 2011 210 204

## Beschreibung

### Stand der Technik

Die Erfindung betrifft eine Flugzeugsitzanordnung gemäß dem Patentanspruch 1.

Es ist bereits eine Flugzeugsitzanordnung vorgeschlagen worden, mit einem ersten Flugzeugsitzmodul, das einen Flugzeugsitzbereich begrenzt, wobei das Flugzeugsitzmodul einen Flugzeugsitz aufweist, der dazu vorgesehen ist, von einem Mittelgang weg auf ein Fenster einer Flugzeugkabine ausgerichtet zu sein, wobei das Flugzeugsitzmodul zumindest eine Umhausungseinheit aufweist, die den Flugzeugsitzbereich zumindest teilweise begrenzt, und mit zumindest einem weiteren Flugzeugsitzmodul, das unmittelbar benachbart zu dem ersten Flugzeugsitzmodul angeordnet ist.

WO 2019/179638 A1 offenbart eine Sitzeinheit für eine Passagiersitzanordnung innerhalb einer Fahrzeugkabine, umfassend einen nach vorn ausgerichteten Sitz und mindestens eine Konsole, die angrenzend an den Sitz und eine Wandstruktur angeordnet ist, wobei der nach vorn ausgerichtete Sitz vor der Wandstruktur angeordnet ist. WO 2021/032954 A1 offenbart einen Flugzeugpassagiersitz, der in einer Sitzsäule angeordnet und von einem Gang weg abgewinkelt ist, sodass die Sitzblickrichtung einen vorgegebenen Winkel relativ zur Gangachse bildet. EP 2 825 460 A2 offenbart eine Flugzeugkabine mit einer primären Sitzeinheit, die eine Konsole aufweist, welche sich in einem Bereich befindet, der nicht höher als eine Primärdistanz vom Boden ist, und die weiter in den Gang hineinragt als der übrige Teil der primären Sitzeinheit. WO 96/18537 A1 offenbart eine Sitzeinheit in einer Flugzeugkabine, die eine feste Umhausung aufweist, innerhalb derer der Rückenteil des Sitzes zurückgelehnt werden kann, wobei die Verstellung durch einen benutzerkontrollierten Motor erfolgt und der Sitz dabei innerhalb der Umhausung verbleibt, wobei optional eine Fußstütze vorgesehen ist, die sich beim Zurücklehnen der Rückenlehne nach außen erstreckt. WO 2014/115107 A1 offenbart eine Anordnung einer Sitzsäule für Fahrgastsitze eines Fahrzeugs, umfassend eine Bettenverlängerung, die eine verstaut Position innerhalb der jeweils vorderen Sitzeinheit und eine ausgefahrene Position innerhalb des Raums zwischen der jeweils vorderen und der jeweils hinteren Sitzeinheit einnehmen kann. GB 2 362 095 A offenbart ein Passagiersitzsystem in einem Transportsystem, wie beispielsweise einem Flugzeug, umfassend eine Säule von Liegesitzen, wobei jeder Sitz einen Stuhl aufweist, der in einer ersten Winkelposition arretierbar und in eine zweite Winkelposition drehbar ist, wobei er auf eine Fußstütze (Ottoman) ausgerichtet wird.

Die Aufgabe der Erfindung besteht insbesondere darin, eine gattungsgemäße Vorrichtung mit verbesserten Eigenschaften hinsichtlich eines Komforts und einer Variabilität bei vorteilhafter Raumausnutzung in einer Flugzeugkabine bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Erfindungsgemäß wird eine Flugzeugsitzanordnung vorgeschlagen, mit einem ersten Flugzeugsitzmodul, das einen Flugzeugsitzbereich begrenzt, wobei das Flugzeugsitzmodul einen Flugzeugsitz aufweist, der dazu vorgesehen ist, in einem Winkel α von über 30 Grad in der Flugzeugkabine montiert zu werden, von einem Mittelgang weg auf ein Fenster einer Flugzeugkabine ausgerichtet zu sein und eine zumindest im Wesentlichen ebene Liegefläche auszubilden, wobei das Flugzeugsitzmodul zumindest eine Umhausungseinheit aufweist, die den Flugzeugsitzbereich zumindest teilweise begrenzt, und mit zumindest einem weiteren Flugzeugsitzmodul, das unmittelbar benachbart zu dem ersten Flugzeugsitzmodul angeordnet ist und das einen weiteren Flugzeugsitzbereich begrenzt, wobei das weitere Flugzeugsitzmodul ebenfalls eine Umhausungseinheit aufweist, die den Flugzeugsitzbereich zumindest teilweise begrenzt, wobei die Umhausungseinheit im Wesentlichen gleich ausgebildet ist wie die Umhausungseinheit des ersten Flugzeugsitzmoduls und den Flugzeugsitzbereich des ersten Flugzeugsitzmoduls von dem Flugzeugsitzbereich des zweiten Flugzeugsitzmoduls abtrennt. Die Flugzeugsitzanordnung ist zur Verwendung in einer Flugzeugkabine eines Flugzeugs vorgesehen. Die Flugzeugkabine weist eine Flugzeugkabinenmittelachse auf. Die Flugzeugkabinenmittelachse weist jeweils einen selben Abstand zu sich gegenüberliegenden Bordwänden der Flugzeugkabine auf. Die Flugzeugkabinenmittelachse ist parallel zu einer Rollachse des Flugzeugs ausgerichtet. Vorzugsweise ist die Flugzeugkabinenmittelachse parallel zu einer Aufständerebene der Flugzeugkabine ausgerichtet. Vorzugsweise weist die Flugzeugkabine einen Flugzeugkabinenboden auf, der die Aufständerebene ausbildet. Die Flugzeugsitzmodule der Flugzeugsitzanordnung sind dazu vorgesehen, auf dem Kabinenboden der Flugzeugkabine aufgeständert zu werden. Unter einer "Flugzeugsitzanordnung" soll eine Anordnung mehrerer Flugzeugsitzmodule verstanden werden, die in zumindest einer Reihe auf einer Aufständerebene, insbesondere auf einem Kabinenboden einer Flugzeugkabine aufgeständert sind. Die Flugzeugsitzmodule der Flugzeugsitzanordnung sind in einer Reihe, die parallel zu der Flugzeugkabinenmittelachse verläuft, hintereinander angeordnet. Die Flugzeugsitzmodule der Flugzeugsitzanordnung sind parallel zueinander ausgerichtet. Die Flugzeugsitzmodule einer Flugzeugsitzanordnung sind parallel versetzt zueinander in einer Reihe angeordnet. Die Flugzeugsitzmodule weisen vorzugsweise alle den gleichen Winkel α zu der Flugzeugkabinenmittelachse der Flugzeugkabine auf. Die Flugzeugsitzanordnung ist zwischen dem Mittelgang der Flugzeugkabine und einer Bordwand der Flugzeugkabine angeordnet. Vorzugsweise sind in einer Flugzeugkabine zumindest zwei Flugzeugsitzanordnungen vorgesehen, wobei je eine Flugzeugsitzanordnung rechts, bzw. links des Mittelgangs der Flugzeugkabine angeordnet ist. Unter einem "Flugzeugsitzmodul" soll ein Modul verstanden werden, dass zumindest einen Flugzeugsitz und weitere Bauteile des Flugzeugsitzbereichs umfasst. Das Flugzeugsitzmodul ist dazu vorgesehen, über eine entsprechende Befestigungsmittel fest auf dem Kabinenboden montiert zu werden. Das Flugzeugsitzmodul ist als ein Modul ausgebildet, das einen Flugzeugsitzbereich definiert und dazu wenigstens einen Teil der Umhausungseinheit, die den Flugzeugsitzbereich zumindest teilweise von einem restlichen Kabinenbereich abtrennt, zumindest einen in dem Flugzeugsitzbereich angeordneten Flugzeugsitz und weitere Elemente des Flugzeugsitzbereichs umfasst, wie insbesondere eine Konsole, eine Ottomane, eine Tischeinheit, eine Verstaueinheit, und/oder eine Bildschirmeinheit. Unter einem "Flugzeugsitzbereich" soll dabei vorzugsweise ein Bereich verstanden werden, den ein Passagier in der Flugzeugkabine persönlich zur Verfügung hat, vorzugsweise während der Passagier das Flugzeugsitzmodul nutzt, wobei vorzugsweise alle Teile des einen Flugzeugsitzmoduls in dem Flugzeugsitzbereich angeordnet sind. Der Flugzeugsitz des Flugzeugsitzmoduls ist dazu vorgesehen, einen Sitzplatz für einen Passagier in dem Flugzeug bereitzustellen. Der Flugzeugsitz umfasst zumindest einen Sitzboden und eine Rückenlehne. Vorzugsweise umfasst der Flugzeugsitz zumindest eine Armlehne. Zusätzlich wäre denkbar, dass der Flugzeugsitz eine Beinstütze umfasst. Grundsätzlich kann der Flugzeugsitz weitere Anbauteile, wie vorzugsweise eine Kopfstütze, umfassen. Vorzugsweise ist der Flugzeugsitz zwischen einer Sitzstellung und einer Liegestellung, vorzugsweise elektromechanisch, verstellbar. Vorzugsweise ist der Flugzeugsitz als ein Full-Flat-Sitz ausgebildet. Unter einem "Full-Flat-Sitz" soll vorzugsweise ein Flugzeugsitz verstanden werden, der, insbesondere elektromechanisch, von der TTL-Stellung in die Liegestellung überführbar ist und in der Liegestellung eine zumindest im Wesentlichen ebene Liegefläche ausbildet. Vorzugsweise ist die zumindest im Wesentlichen ebene Liegefläche in einem Winkel von 3 Grad zu der Aufständerebene geneigt. Besonders bevorzugt sind zumindest ein Sitzboden des Flugzeugsitzes und eine Rückenlehne des Flugzeugsitzes in der Liegestellung zumindest im Wesentlichen parallel zu der Aufständerebene ausgerichtet, auf der der Flugzeugsitz aufgeständert ist. Vorzugsweise weisen der Sitzboden des Flugzeugsitzes und die Rückenlehne des Flugzeugsitzes in der Liegestellung eine gemeinsame Auflagefläche auf, die zumindest im Wesentlichen parallel zu der Aufständerebene ausgerichtet ist. Grundsätzlich ist es auch denkbar, dass der als Full-Flat-Sitz ausgebildete Flugzeugsitz eine zu der Aufständerebene um mehr als 3 Grad geneigte Liegefläche aufweist und dadurch eine zu der Aufständerebene geneigte ebene Liegefläche ausbildet. Der Flugzeugsitz ist dazu vorgesehen, in der Liegestellung die im Wesentlichen ebene Liegefläche bereitzustellen, auf der ein durchschnittlicher Passagier ausgestreckt liegen kann. Unter einer "zumindest im Wesentlichen ebenen Liegefläche" soll eine Liegefläche verstanden werden, die vorzugsweise durchgängig eben ist, es ist grundsätzlich aber auch denkbar, dass zwischen einer Rückenlehnenfläche der Rückenlehne und einer Sitzfläche des Sitzbodens, die in der Liegestellung des Flugzeugsitzes die Liegefläche ausbilden, ein von 180 Grad unterschiedlicher Winkel β eingeschlossen wird. Der Winkel β kann dabei vorzugsweise zwischen 150 Grad und 179 Grad liegen. Vorzugsweise beträgt eine maximale Liegeflächenlänge des Flugzeugsitzes in seiner Liegestellung mindestens 1905 mm (75 Zoll). Bevorzugt beträgt die Liegeflächenlänge zumindest 1981 mm (78 Zoll), besonders bevorzugt 2006 mm (79 Zoll). Durch diese Ausgestaltung kann eine vorteilhaft lange Liegeflächenlänge zur Verfügung gestellt werden. Dadurch kann ein vorteilhaft komfortables Flugzeugsitzmodul erreicht werden. Vorzugsweise ist die maximale Liegeflächenlänge mittels einer 229-Millimeter-Ball-Methode (9-Inch-Ball-Methode) ermittelt, bei der zwei voneinander beabstandete Kugeln mit einem Durchmesser von 229 Millimetern (9 Zoll) für eine Messung der Liegeflächenlänge herangezogen werden.

Vorzugsweise entspricht die maximale Liegeflächenlänge einem Abstand von maximal voneinander beabstandeten Punkten der zwei Kugeln in dem Flugzeugsitzbereich. Bevorzugt liegen die zwei Kugeln auf der Liegefläche des Flugzeugsitzes auf. Vorzugsweise verläuft die Liegeachse parallel oder entlang einer Geraden, die die maximal voneinander beabstandeten Punkte der zwei Kugeln miteinander verbindet. Die zumindest im Wesentlichen ebene Liegefläche wird vorzugsweise von der Rückenlehne, dem Sitzboden und einer von dem Flugzeugsitz getrennt ausgebildeten Ottomane gebildet. Grundsätzlich ist es auch denkbar, dass der Flugzeugsitz zusätzlich ein Fußstützelement aufweist, das an einem vorderen Ende des Sitzbodens verschwenkbar angeordnet ist, und das in einer Liegeposition des Flugzeugsitzes die Liegefläche mit ausbildet.

Unter einer "TTL-Stellung" soll vorzugsweise eine aufrechte Stellung des Flugzeugsitzes verstanden werden, die aus Sicherheitsgründen, insbesondere in einer Rollphase, in einer Startphase und in einer Landephase des Flugzeugs, eingenommen werden muss. Unter einer "TTL-Stellung" soll besonders bevorzugt eine Stellung des Flugzeugsitzes verstanden werden, bei der ein Passagier aufrecht auf dem Flugzeugsitz sitzen kann. Vorzugsweise stehen die Rückenlehne des Flugzeugsitzes und der Sitzboden des Flugzeugsitzes in der Sitzstellung im Wesentlichen senkrecht aufeinander, insbesondere in einem Winkel zwischen 90 Grad und 120 Grad. Vorzugsweise bildet die TTL-Stellung eine erste Endposition des Flugzeugsitzes aus, in die der Flugzeugsitz maximal verstellbar ist. Unter einer "Liegestellung" soll vorzugsweise eine Stellung des Flugzeugsitzes verstanden werden, die dazu vorgesehen ist, eine zumindest im Wesentlichen waagerechte Liegefläche für einen Passagier bereitzustellen, insbesondere damit der Passagier während eines Fluges eine Schlafhaltung einnehmen kann. Vorzugsweise liegt der Passagier in der Liegestellung des Flugzeugsitzes zumindest im Wesentlichen auf dem Flugzeugsitz, insbesondere auf dem Sitzboden und auf der Rückenlehne. Vorzugsweise bildet die Liegestellung eine zweite Endposition des Flugzeugsitzes aus, in die der Flugzeugsitz maximal verstellbar ist. Grundsätzlich können zwischen der Sitzstellung und der Liegestellung weitere Stellungen vorgesehen sein, die insbesondere eine kombinierte Sitz- und Liegestellung ausbilden.

Unter einem "Mittelgang" soll ein Gang zwischen zwei Reihen an Flugzeugsitzmodulen verstanden werden, über den die Flugzeugsitzmodule der Flugzugsitzanordnung zugänglich sind. Vorzugsweise ist genau ein Mittelgang vorgesehen. Die Flugzeugsitzanordnung ist vorzugsweise für eine Flugzeugkabine mit genau einem Mittelgang vorgesehen. Bevorzugt erstreckt sich der zumindest eine Mittelgang zumindest im Wesentlichen parallel zu der Flugzeugkabinenmittelachse. Unter von dem "Mittelgang weg ausgerichtet" soll bezüglich des Flugzeugsitzes verstanden werden, dass eine Sitzrichtung des Flugzeugsitzes von dem Mittelgang weg in Richtung einer Bordwand ausgerichtet ist. Unter einer "Sitzrichtung eines Flugzeugsitzes" soll eine Richtung verstanden werden, welche parallel zu dem Kabinenboden und zumindest im Wesentlichen senkrecht zu einer von der Rückenlehne gebildeten Rückenlehnenfläche ausgerichtet ist. Die Sitzrichtung ist vorzugsweise parallel zu einer längs verlaufenden Mittelachse des Flugzeugsitzes ausgerichtet. Darunter, dass der Flugzeugsitz in einem Winkel α in der Flugzeugkabine montiert ist soll verstanden werden, dass der Flugzeugsitz um den Winkel α zu der Flugzeugkabinenmittelachse verschwenkt in der Flugzeugkabine angebracht ist. Der Winkel α, um den der Flugzeugsitz geschwenkt ist, ist zwischen der Sitzrichtung, also der längs verlaufenden Mittelachse des Flugzeugsitzes und der Flugzeugkabinenmittelachse gemessen. Darunter, dass der Flugzeugsitz um einen Winkel α von zumindest 35 Grad verschwenkt ist soll verstanden werden, dass der Winkel α zumindest 35 Grad beträgt, vorzugsweise in einem Winkelbereich von 40 Grad bis 80 Grad liegt, besonders bevorzugt in einem Winkelbereich von 45 bis 60 Grad. In einer bevorzugten Ausgestaltung beträgt der Winkel α, um den der Flugzeugsitz zu der Flugzeugkabinenmittelachse verschwenkt ist, 55 Grad. Unter einer "Umhausungseinheit" soll vorzugsweise eine aus zumindest einem Element, insbesondere aus zumindest einem Umhausungselement gebildete Einheit verstanden werden, die den Flugzeugsitzbereich permanent von einem Teil der Flugzeugkabine, insbesondere einem vor und/oder hinter dem Flugzeugsitzbereich angeordneten weiteren Flugzeugsitzbereich und/oder dem Mittelgang, zumindest bis auf eine Maximalhöhe, physikalisch abtrennt. Die Umhausungseinheit ist als eine Trenneinheit ausgebildet, die den Flugzeugsitzbereich von dem Mittelgang und zumindest einem weiteren Flugzeugsitzbereich abtrennt. Die Umhausungseinheit kann beispielsweise die zwei Umhausungselemente aufweisen, die jeweils einen Teil des Flugzeugsitzbereichs begrenzen. Die beiden Umhausungselemente sind vorzugsweise zumindest teilweise getrennt voneinander ausgebildet. Die beiden Umhausungselemente können vorzugsweise als eigenständige Elemente ausgebildet sein. Grundsätzlich ist es auch denkbar, dass die beiden Umhausungselemente der Umhausungseinheit zumindest teilweise einstückig miteinander ausgebildet sind. Das Flugzeugsitzmodul bildet einen Durchgangsbereich aus, in dem das Flugzeugsitzmodul frei von der Umhausungseinheit ausgebildet ist, wobei der von dem Flugzeugsitzmodul gebildete Flugzeugsitzbereich durch den Durchgangsbereich zugänglich ist. Der Durchgangsbereich weist vorzugsweise eine Breite von 381 mm (15 Zoll) auf. Unter "zumindest teilweise begrenzen" soll verstanden werden, dass die Umhausungseinheit den Flugzeugsitzbereich zumindest bis zu einer maximalen Höhe der Umhausungseinheit begrenzt und ein Durchgangsbereich freigelassen ist, durch den der Flugzeugsitzbereich erreicht werden kann. Die Umhausungseinheit ist in einem Bereich vor dem Flugzeugsitz vorzugsweise gerade ausgebildet. In einem Bereich des Flugzeugsitzes, also insbesondere in einem Bereich hinter und neben dem Flugzeugsitz ist die Umhausungseinheit gekrümmt, insbesondere C-förmig ausgebildet. Die Umhausungseinheit verläuft in einem Bereich unmittelbar neben dem Flugzeugsitz in einem montierten Zustand im Wesentlichen orthogonal zu der Flugzeugkabinenmittelachse der Flugzeugkabine. Die Umhausungseinheit verläuft in einem dem Mittelgang zugewandten Bereich im Wesentlichen parallel zu der Flugzeugkabinenmittelachse. Ein Türelement des Flugzeugsitzmoduls ist vorzugsweise in dem parallel zu der Flugzeugkabinenmittelachse verlaufenden Teil der Umhausungseinheit verschiebbar angeordnet.

Darunter, dass die Umhausungseinheiten "zumindest im Wesentlichen gleich ausgebildet" sind soll verstanden werden, dass die beiden Umhausungseinheiten eine gleiche Grundstruktur aufweisen und vorzugsweise identisch ausgebildet sind. Die beiden zumindest im Wesentlichen gleich ausgebildeten Umhausungseinheiten weisen einen gleichen Verlauf auf. Die beiden im Wesentlichen gleich ausgebildeten Umhausungseinheiten weisen vorzugsweise eine gleiche Erstreckung auf. Grundsätzlich ist es denkbar, dass die beiden im Wesentlichen gleich ausgebildeten Umhausungseinheiten zumindest in Teilbereichen unterschiedlich ausgebildet sind, beispielsweise ist es denkbar, dass an den Umhausungseinheiten unterschiedliche Anbauteile angebunden sind. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Insbesondere kann durch die erfindungsgemäße Ausgestaltung eine vorteilhaft kompakte Anordnung von Flugzeugsitzmodulen erreicht werden. Dadurch kann ein zur Verfügung stehender Bauraum in einer Flugzeugkabine vorteilhaft effizient ausgenutzt werden. Des Weiteren kann durch die erfindungsgemäße Ausgestaltung eine vorteilhaft komfortable Flugzeugsitzanordnung bereitgestellt werden.

Weiter wird vorgeschlagen, dass die Umhausungseinheit wenigstens ein Umhausungselement aufweist, das zumindest in einem Bereich vor dem Flugzeugsitz parallel zu einer Sitzrichtung des Flugzeugsitzes verläuft, und dazu vorgesehen ist, sich mit einem gangentfernten Ende zumindest bis kurz vor eine Bordwand zu erstrecken. Unter einem "Umhausungselement" soll vorzugsweise ein Bauteil der Umhausungseinheit verstanden werden, das zumindest einen Teilbereich der Umhausungseinheit ausbildet. Das Umhausungselement ist vorzugsweise als ein Wandungselement ausgebildet. Das Umhausungselement ist als ein Shell-Element ausgebildet. Unter einem "Bereich vor dem Flugzeugsitz" soll ein Bereich des Flugzeugsitzbereichs verstanden werden, der in einer aufrechten Sitzstellung des Flugzeugsitzes in Sitzrichtung gesehen vor einer Vorderkante eines Sitzbodens des Flugzeugsitzes liegt. Unter einem "gangentfernten Ende" soll ein dem Mittelgang der Flugzeugkabine in einem montierten Zustand abgewandtes Ende des Umhausungselements verstanden werden. Unter einer "Bordwand" soll vorzugsweise eine seitliche Wand der Flugzeugkabine verstanden werden, welche die Flugzeugkabine seitlich begrenzt. Unter "sich bis kurz vor eine Bordwand erstrecken" soll vorzugsweise verstanden werden, dass sich das Umhausungselement so bis an die Bordwand erstreckt, dass zwischen der Bordwand und dem Ende des Umhausungselements ein Abstand vorhanden ist. Zwischen dem Umhausungselement und der Bordwand kann durch den Abstand ein Spalt vorhanden sein. Vorzugsweise ist es auch denkbar, dass der Spalt zwischen dem Ende des Umhausungselements und der Bordwand durch ein Zwischenelement in einem montierten Zustand verschlossen wird. Das Zwischenelement kann beispielsweise als ein elastisches Element oder als ein einfach zuschneidbares Element ausgebildet sein, das bei der Montage zum Ausgleich von Fertigungstoleranzen an die jeweilige Umhausungseinheit angepasst wird. Dadurch kann die Umhausungseinheit besonders vorteilhaft ausgebildet, und der Flugzeugsitzbereich besonders vorteilhaft von einem benachbarten Flugzeugsitzbereich abgegrenzt werden.

Ferner wird vorgeschlagen, dass das Flugzeugsitzmodul eine Konsoleneinheit aufweist, die zumindest eine Verstaumöglichkeit ausbildet, die an einer Innenseite der Umhausungseinheit des ersten Flugzeugsitzmoduls, in einem Bereich vor dem Flugzeugsitz, angebunden ist. Unter einer "Konsoleneinheit" soll vorzugsweise eine Einheit verstanden werden, die zumindest ein Funktionselement, vorzugsweise mehrere Funktionselemente, die zu einer Verwendung durch einen Passagier vorgesehen sind, aufweist. Ein Funktionselement kann als eine Verstaumöglichkeit, als eine Bildschirmeinheit, ein Tablethalter, ein Cupholder, eine Bedieneinheit, eine Steckereinheit oder als eine andere, dem Fachmann als sinnvoll erscheinende Einheit verstanden werden, die einem Passagier während eines Fluges zur Verfügung gestellt wird. Unter einer "Verstaumöglichkeit" soll vorzugsweise ein Bereich oder ein Element verstanden werden, in dem Utensilien und Literatur verstaubar sind. Eine Verstaumöglichkeit kann vorzugsweise als ein Ablagefach, als ein Ablageregal, als ein verschließbares Staufach, oder als ein Befestigungsmittel, wie beispielsweise ein elastisches Spannband verstanden werden. Unter einer "Innenseite der Umhausungseinheit" soll eine dem Flugzeugsitzbereich zugewandte Seite der Umhausungseinheit verstanden werden. Die an die Innenseite der Umhausungseinheit angebundene Konsoleneinheit ist vorzugsweise über geeignete Befestigungsmittel an der Umhausungseinheit demontierbar befestigt, kann grundsätzlich aber auch zumindest in Teilbereichen einstückig in die Umhausungseinheit integriert sein. Dadurch kann das Flugzeugsitzmodul besonders vorteilhaft und funktional für einen Passagier ausgebildet werden.

Es wird weiterhin vorgeschlagen, dass das Flugzeugsitzmodul eine weitere Konsoleneinheit aufweist, die frontal vor dem Flugzeugsitz angeordnet ist und zumindest einen Fußablagebereich und/oder ein fixiertes Tischelement aufweist. Unter einer "weiteren Konsoleneinheit" soll eine von der ersten Konsoleneinheit getrennt ausgebildete weitere Konsoleneinheit verstanden werden, die eine Einheit aus weiteren Funktionsbauteilen ausbildet, die zu einer Verwendung durch einen Passagier vorgesehen sind. Grundsätzlich ist es auch denkbar, dass die weitere Konsoleneinheit auch mit der ersten Konsoleneinheit zusammenhängend ausgebildet ist. Beispielsweise ist denkbar, dass die weitere Konsoleneinheit zumindest teilweise einstückig mit der ersten Konsoleneinheit ausgebildet ist. Die erste Konsoleneinheit und die weitere Konsoleneinheit könnten aus einem gemeinsamen Bauteil gebildet werden. Insbesondere könnte die weitere Konsoleneinheit zumindest teilweise einstückig mit der Umhausungseinheit ausgebildet sein, die die erste Konsoleneinheit zumindest teilweise ausbildet. Unter frontal vor dem Flugzeugsitz angeordnet soll vorzugsweise verstanden werden, dass die weitere Konsoleneinheit in Sitzrichtung des Flugzeugsitzes betrachtet direkt vor dem Flugzeugsitz angebracht ist. Unter einem "Fußablagebereich" soll ein Bereich verstanden werden, der eine, vorzugsweise gepolsterte, Fläche ausbildet, die dazu vorgesehen ist, dass ein Passagier von dem Flugzeugsitz aus, seine Füße darauf ablegen kann. Der Fußablagebereich bildet in der Liegestellung des Flugzeugsitzes zusammen mit dem Flugzeugsitz die im Wesentlichen ebene Liegefläche aus. Unter einem "fixierten Tischelement" soll vorzugsweise ein Tischelement verstanden werden, das starr und unbeweglich in dem Flugzeugsitzmodul befestigt ist und nicht zwischen unterschiedlichen Stellungen verstellt werden kann. Das fixierte Tischelement bildet eine stationäre Tischfläche aus, die dazu vorgesehen ist, von einem Passagier genutzt zu werden. Vorzugsweise ist der Flugzeugsitz dazu vorgesehen, in seiner aufrechten Sitzposition nach vorne, in Sitzrichtung verschiebbar zu sein. Dadurch ist es vorzugsweise denkbar, dass das fixierte Tischelement als ein Schreibtisch nutzbar ist, wenn der Flugzeugsitz in eine nach vorne verstellte Sitzstellung axial verschoben ist. Dadurch kann der Flugzeugsitzbereich besonders vorteilhaft und komfortabel für einen Passagier ausgebildet werden.

Des Weiteren wird vorgeschlagen, dass die weitere Konsoleneinheit an der Umhausungseinheit des ersten Flugzeugsitzmoduls angebunden ist und sich bis kurz vor einer Außenseite der Umhausungseinheit des zweiten Flugzeugsitzmoduls erstreckt. Unter einer "Außenseite der Umhausungseinheit des zweiten Flugzeugsitzmoduls" soll vorzugsweise eine dem Flugzeugsitzbereich des ersten Flugzeugsitzmoduls zugewandte Seite der Umhausungseinheit des zweiten Flugzeugsitzmoduls verstanden werden. Die Außenseite der Umhausungseinheit des zweiten Flugzeugsitzmoduls ist dem Flugzeugsitzbereich des zweiten Flugzeugsitzmoduls abgewandt. Unter "sich bis kurz vor einer Außenseite der Umhausungseinheit erstrecken" soll verstanden werden, dass sich die weitere Konsoleneinheit so bis an die Umhausungseinheit des zweiten Flugzeugsitzmoduls erstreckt, dass zwischen der Außenseite der Umhausungseinheit und dem Ende der weiteren Konsoleneinheit ein Abstand vorhanden ist. Zwischen der Umhausungseinheit des zweiten Flugzeugsitzmoduls und der weiteren Konsoleneinheit kann durch den Abstand ein Spalt vorhanden sein. Vorzugsweise ist der Spalt zwischen der Umhausungseinheit des zweiten Flugzeugsitzmoduls und der weiteren Konsoleneinheit in einem montierten Zustand zumindest teilweise durch zumindest ein Überbrückungselement geschlossen. Die weitere Konsoleneinheit ist vorteilhaft lediglich an der Umhausungseinheit des ersten Flugzeugsitzmoduls angebunden und über Anbindungspunkte mit dem Kabinenboden verbunden. Die weitere Konsoleneinheit ist vorteilhaft nicht direkt an die Umhausungseinheit des zweiten Flugzeugsitzmoduls angebunden. Dadurch kann die weitere Konsoleneinheit besonders vorteilhaft in das Flugzeugsitzmodul integriert werden, wobei das Flugzeugsitzmodul besonders vorteilhaft für unterschiedliche Abstände zwischen benachbarten Flugzeugsitzmodulen ausgebildet ist.

Weiterhin wird vorgeschlagen, dass das Flugzeugsitzmodul ein Regalelement aufweist, das an der Außenseite der Umhausungseinheit des zweiten Flugzeugsitzmoduls angebunden ist und einen Spalt zwischen der Umhausungseinheit und der weiteren Konsoleneinheit, insbesondere dem fixierten Tischelement, überbrückt. Unter einem "Regalelement" soll vorzugsweise ein Element verstanden werden, das zumindest eine Ablagefläche ausbildet. Vorzugsweise bildet das Regalelement einen wannenförmigen Ablagebereich aus, in dem verschiedene, insbesondere kleinere, Utensilien sicher verstaut werden können. Das Regalelement ist vorzugsweise in einer Höhe unmittelbar oberhalb der von dem fixierten Tischelement ausgebildeten Tischfläche ausgebildet. Vorzugsweise ist es denkbar, dass das Regalelement mit seiner Unterseite zumindest teilweise auf der Tischfläche des fixierten Tischelements aufliegt. Grundsätzlich ist es auch denkbar, dass das Regalelement über geeignete Verbindungselemente an dem Tischelement montiert ist. Dadurch kann vorteilhaft ein Spalt zwischen dem fixierten Tischelement und der Außenseite der Umhausungseinheit des zweiten Flugzeugsitzmoduls geschlossen werden, um insbesondere ein Hindurchfallen von Gegenständen von dem Tischelement zu verhindern. Ferner kann eine optisch ansprechende geschlossene Struktur der weiteren Konsoleneinheit geschaffen werden.

Außerdem wird vorgeschlagen, dass die weitere Konsoleneinheit in einer Draufsicht im Wesentlichen als ein Parallelogramm oder ein Dreieck ausgebildet ist. Unter einer "Draufsicht" soll eine Ansicht von oben, in einem 90 Grad Winkel auf die Aufständerebene, also vorzugsweise den Kabinenboden der Flugzeugkabine, verstanden werden. Dadurch kann die weitere Konsoleneinheit besonders vorteilhaft für eine Integration in das Flugzeugsitzmodul ausgebildet werden.

Es wird weiter vorgeschlagen, dass die weitere Konsoleneinheit ein Abstützelement aufweist, das zumindest die fixierte Tischeinheit an einer der Umhausungseinheit des ersten Flugzeugsitzmoduls abgewandten Seite abstützt. Unter einem "Abstützelement" soll vorzugsweise ein Element verstanden werden, über das Kräfte in eine Aufständerebene, also in montiertem Zustand in den Kabinenboden abgeleitet werden können. Das Abstützelement ist vorzugsweise als ein vertikal ausgerichteter Träger oder eine Wandung ausgebildet. Das Abstützelement ist mit einem ersten Ende fest mit der fixierten Tischeinheit und mit einem zweiten Ende an einem Montageträger, auf dem die weitere Konsoleneinheit bzw. das gesamte Flugzeugsitzmodul auf dem Kabinenboden aufgeständert ist, angebunden. Dadurch kann die weitere Konsoleneinheit, insbesondere die fixierte Tischeinheit besonders stabil ausgebildet werden.

Zudem wird vorgeschlagen, dass das Flugzeugsitzmodul ein verstellbares Tischelement aufweist, das linear verschiebbar an der Innenseite der Umhausungseinheit angebunden ist und parallel zur Sitzrichtung zwischen einer Verstaustellung und einer Gebrauchsstellung verschiebbar ist. Unter einem "verstellbaren Tischelement" soll vorzugsweise ein Tischelement verstanden werden, das zumindest zwischen einer Verstaustellung und zumindest einer Gebrauchsstellung von einem Passagier verstellbar ist. In der Verstaustellung ist das verstellbare Tischelement nicht von einem Passagier nutzbar und möglichst platzsparend verstaut. Vorzugsweise ist das verstellbare Tischelement in der Verstaustellung zumindest im Wesentlichen, besonders bevorzugt vollständig unterhalb des fixierten Tischelements angeordnet. In einer Gebrauchsstellung ist das verstellbare Tischelement von einem auf dem Flugzeugsitz sitzenden Passagier nutzbar. In einer Gebrauchsstellung ist das Tischelement aus seiner Verstaustellung, insbesondere von seiner Anordnung unterhalb des fixierten Tischelements in Richtung des Flugzeugsitzes bewegt. Das verstellbare Tischelement kann in verschiedenen Stellungen zu dem Flugzeugsitz verstellt werden. Das verstellbare Tischelement ist bis in eine maximal ausgefahrene Gebrauchsstellung, in der das Tischelement über einem Sitzboden des Flugzeugsitzes in seiner aufrechten Sitzposition angeordnet ist, verfahrbar. Das verstellbare Tischelement ist linear zwischen der Verstaustellung und der maximal ausgefahrenen Gebrauchsstellung verstellbar. Das verstellbare Tischelement weist eine Verstellachse auf, entlang der das Tischelement verstellbar ist, die parallel zu der Sitzrichtung des Flugzeugsitzes des Flugzeugsitzmoduls ausgerichtet ist. Dadurch kann eine besonders vorteilhaft nutzbare Tischfläche für den auf dem Flugzeugsitz sitzenden Passagier bereitgestellt werden. Das Flugzeugsitzmodul kann dadurch besonders komfortabel ausgebildet werden.

Weiter wird vorgeschlagen, dass das verstellbare Tischelement an einer Unterseite des fixierten Tischelements angeordnet ist und über zumindest eine Lagereinheit an dem fixierten Tischelement befestigt ist. Unter einer "Lagereinheit" soll eine Linearlagereinheit aus zumindest einem Linearlager verstanden werden, über die das Tischelement linear verschiebbar gelagert ist. Vorzugsweise weist die Lagereinheit ein erstes als Führungsschiene ausgebildetes Linearlager auf, das an einer Unterseite des fixierten Tischelements fixiert ist. Vorteilhaft ist das verstellbare Tischelement über zumindest eine zweite Lagereinheit gelagert. Die zweite Lagereinheit ist vorteilhaft an einer Innenseite der Umhausungseinheit des ersten Flugzeugsitzmoduls angebunden. Grundsätzlich wäre es auch denkbar, dass die zweite Lagereinheit ebenfalls an der Unterseite des fixierten Tischelements angebracht ist. Vorzugsweise weist das verstellbare Tischelement eine Breite von mindestens 381 mm (15 Zoll), vorteilhaft 432 mm (17 Zoll) und besonders bevorzugt von zumindest 482 mm (19 Zoll auf. Vorzugsweise weist das verstellbare Tischelement eine Breite auf, die im Wesentlichen gleich groß ist wie eine Breite des fixierten Tischelements der weiteren Konsoleneinheit. Dadurch kann ein besonders vorteilhaft breiter Tisch bereitgestellt werden, der in unterschiedlichen Positionen zu dem Flugzeugsitz angeordnet werden kann. Das breite Tischelement kann besonders vorteilhaft, ohne dass es verdreht werden muss, aus seiner Verstaustellung heraus in seine Gebrauchsstellung gebracht werden. Dadurch kann das verstellbare Tischelement besonders vorteilhaft in dem Flugzeugsitzmodul integriert werden.

Ferner wird vorgeschlagen, dass das fixierte Tischelement eine Vorderkante aufweist, die orthogonal zu der Sitzrichtung des Flugzeugsitzes ausgerichtet ist. Unter einer "Vorderkante des fixierten Tischelements" soll eine dem Flugzeugsitz in montiertem Zustand zugewandte Seite des Tischelements verstanden werden. Dadurch kann das fixierte Tischelement besonders vorteilhaft ausgebildet werden.

Es wird weiterhin vorgeschlagen, dass das Flugzeugsitzmodul eine Monitoreinheit aufweist, die verschwenkbar an der Innenseite der Umhausungseinheit angebunden ist. Unter einer "Monitoreinheit" soll vorzugsweise eine Einheit verstanden werden, die zumindest einen Bildschirm aufweist. Vorzugsweise weist die Monitoreinheit ein Befestigungsgehäuse auf, in dem der Bildschirm befestigt ist. Zudem weist die Monitoreinheit eine Lagervorrichtung auf, über die das Befestigungsgehäuse mit dem Bildschirm beweglich an der Umhausungseinheit montiert ist. Die Lagervorrichtung umfasst zumindest ein Schwenklager, über das die Bildschirmeinheit verschwenkbar an der Innenseite der Umhausungseinheit angebracht ist. Dadurch kann ein Monitor besonders vorteilhaft in dem Flugzeugsitzmodul integriert werden.

Des Weiteren wird vorgeschlagen, dass auf einer Rückseite der Monitoreinheit zumindest ein Befestigungsmittel zur Verstauung von Utensilien angeordnet ist. Unter einer "Rückseite der Monitoreinheit" soll vorzugsweise eine dem Bildschirm gegenüberliegende Seite der Monitoreinheit verstanden werden. Die Rückseite der Monitoreinheit ist von einer dem Bildschirm abgewandten Seite des Befestigungsgehäuses der Monitoreinheit gebildet. Unter einem "Befestigungsmittel" soll vorzugsweise ein Mittel oder Element verstanden werden über das Utensilien verliersicher angebundenen bzw. verstaut werden können. Das an der Monitoreinheit angeordnete Befestigungsmittel ist vorzugsweise als eine Literaturtasche, als ein Regalelement, ein Befestigungshaken oder ein Spannelement ausgebildet. Unter "Utensilien", die zur Verstauung mittels des Befestigungsmittels vorgesehen sind, sollen insbesondere kleinere Gegenstände eines Passagiers oder Literatur verstanden werden. Dadurch kann die Monitoreinheit besonders vorteilhaft derart ausgebildet werden, dass Utensilien sowohl in einer Gebrauchsstellung als auch in einer Verstaustellung vorteilhaft verstaut werden können.

Weiterhin wird vorgeschlagen, dass das erste Flugzeugsitzmodul und das zweite Flugzeugsitzmodul im Wesentlichen identisch ausgebildet sind, wobei die beiden Flugzeugsitzmodule dazu vorgesehen sind, in unterschiedlichen Abständen zueinander angeordnet zu werden. Darunter, dass die "Flugzeugsitzmodule im Wesentlichen identisch ausgebildet sind" soll vorzugsweise verstanden werden, dass die beiden benachbarten Flugzeugsitzmodule in ihrer Grundausbildung gleich ausgebildet sind, sich aber grundsätzlich in einzelnen Anbauteilen unterscheiden können. Vorzugsweise sind die Flugzeugsitzmodule komplett identisch ausgebildet. Die Flugzeugsitzmodule sind in unterschiedlichen Sitzabständen zueinander in der Flugzeugkabine anordenbar. Darunter dass die Flugzeugsitzmodule dazu vorgesehen sind, in unterschiedlichen Abständen zueinander angeordnet zu werden, soll vorzugsweise verstanden werden, dass die Flugzeugsitzmodule ohne Veränderung an ihrer Grundstruktur zur Ausbildung unterschiedlicher Layouts in unterschiedlichen Abständen zueinander in einer Flugzeugkabine montierbar sind. Die Flugzeugsitzmodule, die im Wesentlichen gleich ausgebildet sind, sind für unterschiedliche Layouts dazu vorgesehen, in unterschiedlichen Abständen, insbesondere unterschiedlichen Sitzabständen, zueinander montierbar zu sein, insbesondere ohne neu zugelassen werden zu müssen. Lediglich unterschiedliche Überbrückungselemente können vorgesehen sein, um die bei unterschiedlichen Abständen unterschiedlich großen Spalte zwischen den Flugzeugsitzmodulen, insbesondere der weiteren Konsoleneinheit des ersten Flugzeugsitzmoduls und der Außenseite der Umhausungseinheit des zweiten Flugzeugsitzmoduls, zu überbrücken. Dadurch können die Flugzeugsitzmodule besonders vorteilhaft in gleicher Grundkonfiguration für unterschiedliche Sitzabstände genutzt werden. So können die Flugzeugsitzmodule zur Ausgestaltung unterschiedlicher Layouts in einer Flugzeugkabine besonders einfach und ohne konstruktive Veränderungen in verschiedenen Abständen zueinander montiert werden. Besonders vorteilhaft können mit den Flugzeugsitzmodulen unterschiedliche Sitzabstände realisiert werden, ohne dass die entsprechenden Flugzeugsitzmodule zusätzliche Zertifizierungstests (Crashtests) durchlaufen müssen, um zugelassen zu werden.

Außerdem wird vorgeschlagen, dass das erste Flugzeugsitzmodul zumindest ein Überbrückungselement aufweist, das in einem montierten Zustand einen Spalt zwischen der weiteren Konsoleneinheit und der Umhausungseinheit des zweiten Flugzeugsitzmoduls schließt. Dadurch kann das Flugzeugsitzmodul besonders vorteilhaft einfach für unterschiedliche Abstände zwischen zwei Flugzeugsitzmodulen angepasst werden.

Es wird weiter eine Flugzeugkabine vorgeschlagen, mit einem einzelnen Mittelgang und einer ersten Flugzeugsitzanordnung mit mehreren Flugzeugsitzmodulen, die zwischen dem Mittelgang und einer ersten Bordwand angeordnet ist, und mit einer zweiten Flugzeugsitzanordnung mit mehreren Flugzeugsitzmodulen, die zwischen dem Mittelgang und einer zweiten Bordwand angeordnet ist. Dadurch kann eine Flugzeugsitzkabine mit einem besonders vorteilhaften Layout bereitgestellt werden.

Zudem wird vorgeschlagen, dass die Flugzeugsitzmodule jeweils einen Flugzeugsitz aufweisen, die in einem Winkel α von 35 - 80 Grad auf die Bordwand ausgerichtet sind. Dadurch kann das Layout der Flugzeugsitzanordnung in der Flugzeugkabine besonders vorteilhaft ausgebildet werden.

Die erfindungsgemäße Flugzeugsitzanordnung und die Flugzeugkabine sollen hierbei nicht auf die oben beschriebene Anwendung und Ausführungsform beschränkt sein. Insbesondere kann die erfindungsgemäße Flugzeugsitzanordnung und die Flugzeugkabine zu einer Erfüllung einer hierin beschriebenen Funktionsweise eine von einer hierin genannten Anzahl von einzelnen Elementen, Bauteilen und Einheiten abweichende Anzahl aufweisen, soweit sie in den Schutzbereich der beigefügten Ansprüche fallen.

### Zeichnungen

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, soweit sie in den Schutzbereich der beigefügten Ansprüche fallen.

Es zeigen:
- Fig. 1: Eine schematische Draufsicht einer erfindungsgemäßen Flugzeugkabine mit einem Layout aus zwei Reihen an erfindungsgemäßen Flugzeugsitzanordnungen mit einem einzigen Mittelgang,
- Fig. 2: eine schematische Draufsicht auf zwei benachbarte Flugzeugsitzmodule der erfindungsgemäßen Flugzeugsitzanordnung,
- Fig. 3: eine schematische Ansicht mehreren nebeneinander angeordneten Flugzeugsitzmodulen der Flugzeugsitzanordnung,
- Fig. 4: eine schematische Ansicht eines Flugzeugsitzmoduls, das einen Flugzeugsitzbereich ausbildet, mit einem Flugzeugsitz des Flugzeugsitzmoduls in einer Liegeposition,
- Fig. 5: eine schematische Ansicht eines einzelnen Flugzeugsitzmoduls von einer Seite,
- Fig. 6: eine schematische Ansicht des von dem Flugzeugsitzmodul ausgebildeten Flugzeugsitzbereichs mit einer ersten Konsoleneinheit und einer weiteren Konsoleneinheit und einer Monitoreinheit in einer ausgeklappten Stellung,
- Fig. 7: eine schematische Ansicht des von dem Flugzeugsitzmodul ausgebildeten Flugzeugsitzbereichs mit der Monitoreinheit in einer eingeklappten Stellung,
- Fig. 8: eine weitere Detailansicht des Flugzeugsitzmoduls und der weiteren Konsoleneinheit, die ein fixiertes Tischelement und ein verstellbares Tischelement aufweist,
- Fig. 9: eine weitere schematische Ansicht des von dem Flugzeugsitzmodul ausgebildeten Flugzeugsitzbereichs mit der verstellbaren Tischeinheit in einer Gebrauchsstellung und der Monitoreinheit in einer ausgeklappten Stellung,
- Fig. 10: eine schematische Draufsicht auf das erste und das zweite Flugzeugsitzmodul mit dem verstellbaren Tischelement in einer maximal ausgefahrenen Gebrauchsstellung und
- Fig. 11: eine schematische Ansicht eines ersten Flugzeugsitzmoduls einer erfindungsgemäßen Flugzeugsitzanordnung in einem zweiten Ausführungsbeispiel.

### Beschreibung der Ausführungsbeispiele

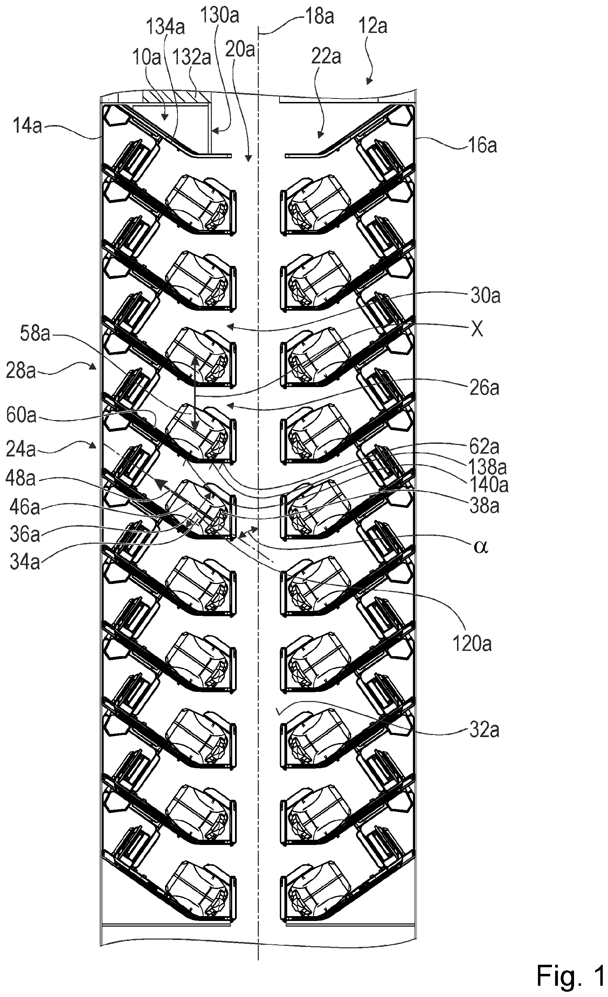

Die Figur 1 zeigt ein erstes Ausführungsbeispiel einer erfindungsgemäßen Flugzeugkabine 12a. In der Figur 1 ist ein Ausschnitt einer Flugzeugkabine 12a gezeigt. Die Flugzeugkabine 12a weist zwei gegenüberliegende Bordwände 14a, 16a auf, die die Flugzeugkabine 12a seitlich begrenzen. Die erste Bordwand 14a ist als eine von einem Heck der Flugzeugkabine 12a gesehen linke Bordwand 14a ausgebildet. Die zweite Bordwand 16a ist als eine von einem Heck der Flugzeugkabine 12a gesehen rechte Bordwand 16a ausgebildet. Die Flugzeugkabine 12a weist in die Bordwände 14a, 16a eingebrachte Fenster 50a auf. Die Fenster 50a sind vorzugsweise in regelmäßigen Abständen in die Bordwände 14a, 16a der Flugzeugkabine 12a eingebracht. Grundsätzlich wäre es auch denkbar, dass statt der Fenster 50a an den entsprechenden Stellen Displays vorgesehen sind. Die Flugzeugkabine 12a bildet eine Flugzeugkabinenmittelachse 18a aus. Die Flugzeugkabinenmittelachse 18a ist jeweils mittig zwischen den gegenüberliegenden Bordwänden 14a, 16a der Flugzeugkabine 12a angeordnet. Die Flugzeugkabinenmittelachse 18a ist als eine Längsachse der Flugzeugkabine 12a ausgebildet. Die Flugzeugkabinenmittelachse 18a ist parallel zu einer Aufständerebene der Flugzeugkabine 12a ausgerichtet. Die Flugzeugkabine 12a weist einen Kabinenboden 32a auf. Der Kabinenboden 32a bildet die Aufständerebene der Flugzeugkabine 12a aus. Die Flugzeugkabine 12a weist einen Mittelgang 20a auf. Der Mittelgang 20a ist als ein einzelner Gang ausgebildet. Die Flugzeugkabine 12a weist lediglich den einen Mittelgang 20a auf. Der Mittelgang ist mittig zwischen den gegenüberliegenden Bordwänden 14a, 16a der Flugzeugkabine 12a angeordnet. Der Mittelgang 20a verläuft koaxial zu der Flugzeugkabinenmittelachse 18a der Flugzeugkabine 12a.

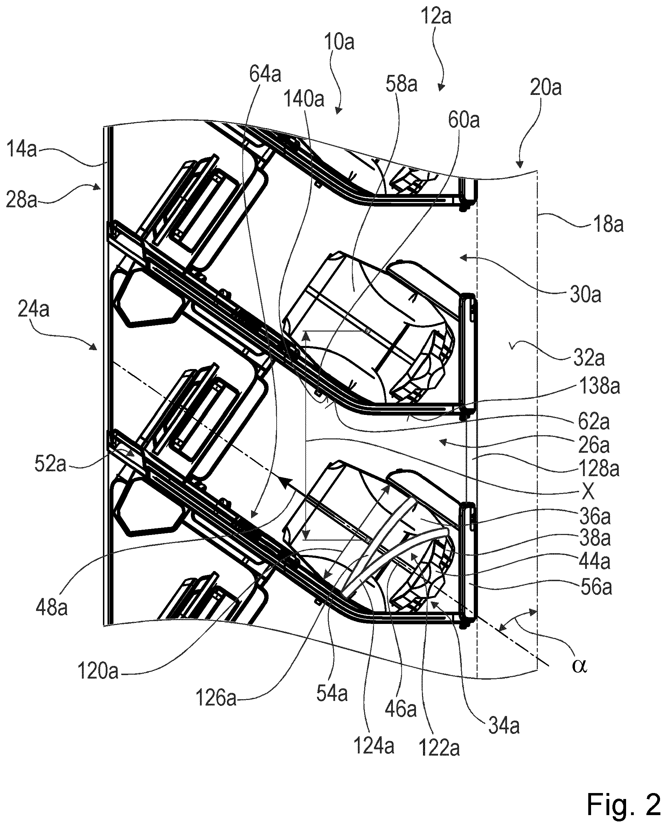

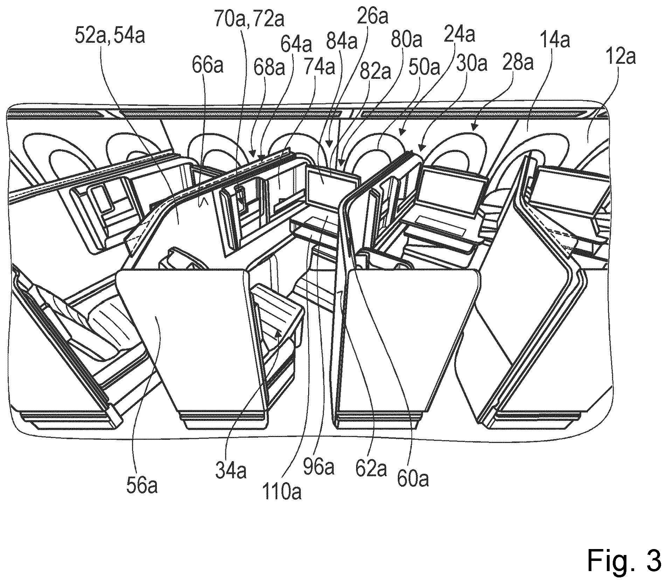

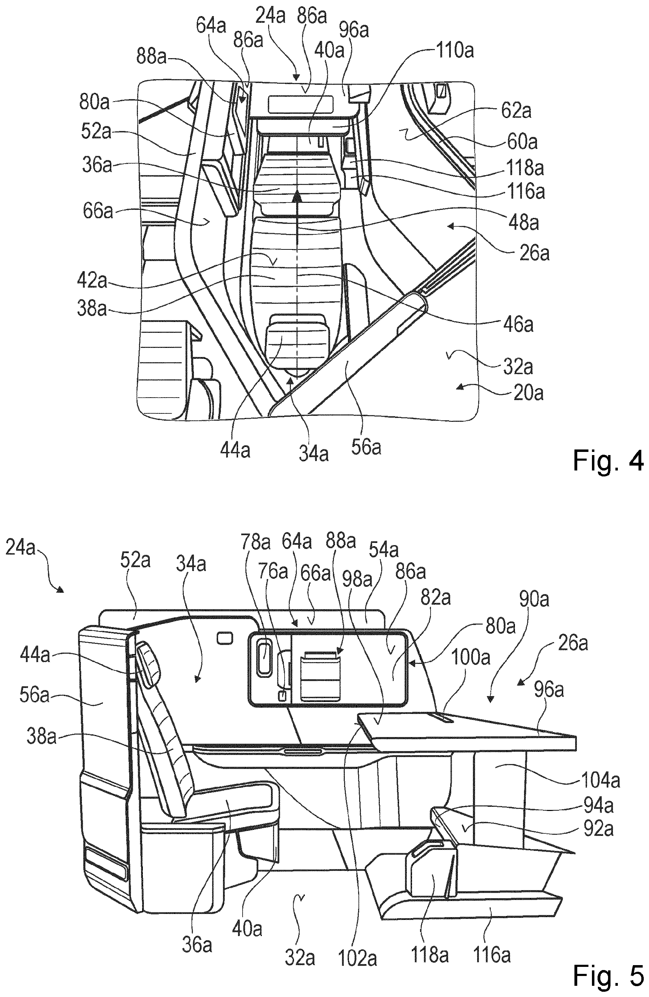

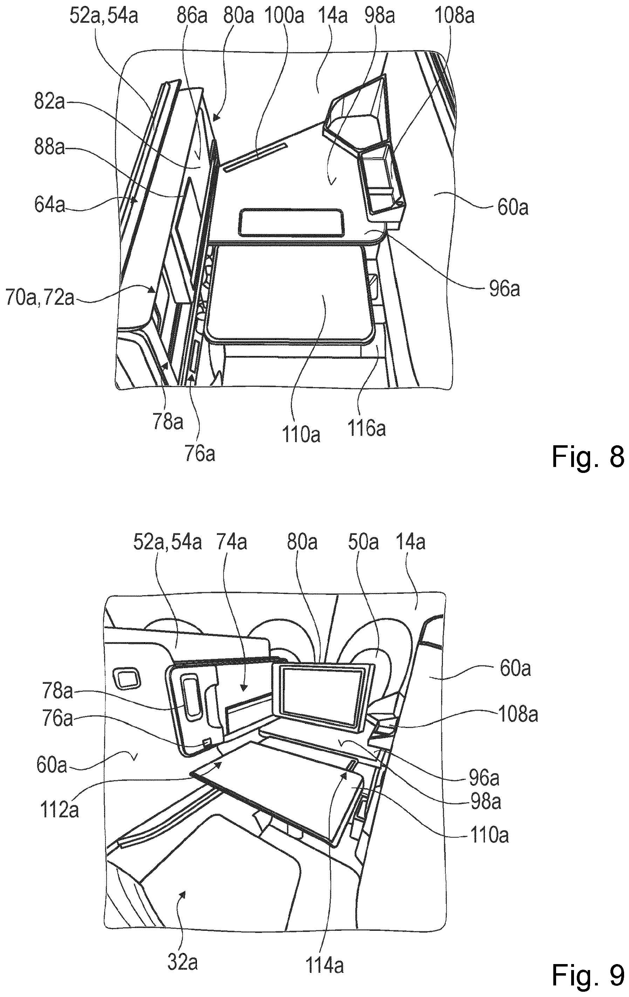

Die Figuren 1 bis 10 zeigen zwei erfindungsgemäße Flugzeugsitzanordnungen 10a, 22a. Die Flugzeugkabine 12a umfasst die erste Flugzeugsitzanordnung 10a und die zweite Flugzeugsitzanordnung 22a. Die erste Flugzeugsitzanordnung 10a ist auf einer linken Seite des Mittelgangs 20a angeordnet. Die erste Flugzeugsitzanordnung 10a ist also zwischen dem Mittelgang 20a und der linken Bordwand 14a angeordnet. Die zweite Flugzeugsitzanordnung 22a ist auf einer rechten Seite des Mittelgangs 20a angeordnet. Die zweite Flugzeugsitzanordnung 22a ist also zwischen dem Mittelgang 20a und der rechten Bordwand 16a angeordnet. Die beiden Flugzeugsitzanordnungen 10a, 22a sind auf gegenüberliegenden Seiten des Mittelgangs 20a angeordnet. Die beiden Flugzeugsitzanordnungen 10a, 22a sind im Wesentlichen gleich ausgebildet. Die beiden Flugzeugsitzanordnungen 10a, 22a sind spiegelbildlich identisch ausgebildet. Die zweite Flugzeugsitzanordnung 22a bildet eine Spiegelung der ersten Flugzeugsitzanordnung 10a an der Flugzeugkabinenmittelachse 18a aus. Deshalb soll im Folgenden lediglich die erste Flugzeugsitzanordnung 10a näher beschrieben werden. Eine Erläuterung der zweiten Flugzeugsitzanordnung 22a kann anhand der folgenden Beschreibung der ersten Flugzeugsitzanordnung 10a erfolgen.

Die Flugzeugsitzanordnung 10a umfasst ein erstes Flugzeugsitzmodul 24a. Das erste Flugzeugsitzmodul 24a begrenzt einen Flugzeugsitzbereich 26a. Die Flugzeugsitzanordnung 10a umfasst ein zweites Flugzeugsitzmodul 28a. Das zweite Flugzeugsitzmodul 28a begrenzt einen weiteren Flugzeugsitzbereich 30a. Das zweite Flugzeugsitzmodul 28a ist unmittelbar neben dem ersten Flugzeugsitzmodul 24a angeordnet. Die beiden Flugzeugsitzmodule 24a, 28a sind unmittelbar angrenzend aneinander angeordnet. Die Flugzeugsitzanordnung 10a umfasst weitere Flugzeugsitzmodule. Beispielhaft weist das in der Figur 1 gezeigte Layout der Flugzeugkabine 12a zehn Flugzeugsitzmodule auf. Grundsätzlich wäre es auch denkbar, dass die Flugzeugsitzanordnung 10a eine andere Anzahl an Flugzeugsitzmodulen 24a, 28a aufweist. Die Flugzeugsitzmodule 24a, 28a der Flugzeugsitzanordnung 10a sind alle hintereinander in einer Reihe angeordnet. Die Flugzeugsitzmodule 24a, 28a der Flugzeugsitzanordnung 10a sind alle im Wesentlichen identisch ausgebildet. Grundsätzlich wäre es denkbar, dass einzelne Flugzeugsitzmodule 24a, 28a kleine Unterschiede aufweisen. Insbesondere ist es denkbar, dass ein vorderstes der in einer Reihe angeordneten Flugzeugsitzmodule oder ein hinterstes in der einen Reihe angeordneten Flugzeugsitzmodule der Flugzeugsitzanordnung 10a teilweise unterschiedlich ausgebildet sind. Die Formulierung "erstes Flugzeugsitzmodul" und "zweites Flugzeugsitzmodul" bezieht sich nicht auf eine Position in der Reihe an Flugzeugsitzmodulen, sondern ist lediglich zur Unterscheidung der zwei im Folgenden näher beschriebenen, direkt nebeneinander angeordneten Flugzeugsitzmodule 24a, 28a gedacht.

Das erste Flugzeugsitzmodul 24a weist einen Flugzeugsitz 34a auf. Der Flugzeugsitz 34a weist einen Sitzboden 36a und eine Rückenlehne 38a auf. Zudem weist der Flugzeugsitz 34a ein schwenkbar an einem vorderen Ende des Sitzbodens 36a angeordnetes Beinstützelement 40a auf. Der Flugzeugsitz 34a weist ein nicht näher dargestelltes Grundgestell auf. Über das Grundgestell ist der Flugzeugsitz 34a auf dem Kabinenboden 32a aufgeständert. Der Flugzeugsitz 34a ist als ein Full-Flat-Sitz ausgebildet. Der Flugzeugsitz 34a kann zwischen einer TTL-Sitzstellung, also einer aufrechten Sitzstellung und einer Liegestellung verstellt werden. In der Liegestellung bildet der Flugzeugsitz 34a eine im Wesentlichen ebene Liegefläche 42a aus. In der Liegestellung bilden der Sitzboden 36a, die Rückenlehne 38a und das Beinstützelement 40a jeweils einen Teil der Liegefläche 42a des Flugzeugsitzes 34a aus. Grundsätzlich wäre es auch denkbar, dass der Flugzeugsitz 34a kein Beinstützelement 40a aufweist. Der Flugzeugsitz 34a weist eine nicht näher dargestellte Kinematikeinheit auf, mittels der der Flugzeugsitz 34a elektro-mechanisch zwischen der TTL-Stellung und der Liegestellung verfahren werden kann. Der Flugzeugsitz 34a weist weiter ein Kopfstützelement 44a auf, das in einem oberen Bereich der Rückenlehne 38a angebracht ist. Das Kopfstützelement 44a ist dazu vorgesehen, einen Kopfabstützbereich auszubilden. Das Kopfstützelement 44a ist vorzugsweise höhenverstellbar an der Rückenlehne 38a angebunden. Der Sitzboden 36a bildet eine Sitzbreite 120a des Flugzeugsitzes 34a aus. Die Sitzbreite 120a des Flugzeugsitzes 34a ist als eine Breite ausgebildet, die orthogonal zu der Mittelachse 46a des Flugzeugsitzes 34a an seiner breitesten Stelle gemessen wird. Die Sitzbreite 120a des Flugzeugsitzes 34a beträgt vorzugsweise 508 mm (20 Zoll).

Der Flugzeugsitz 34a umfasst eine Dreipunktgurteinheit 122a. Die Dreipunktgurteinheit 122a ist zur Fixierung des Passagiers auf dem Flugzeugsitz 34a vorgesehen. Mittels der Dreipunktgurteinheit 122a kann ein Passagier auf dem Flugzeugsitz 34a angeschnallt werden. Die Dreipunktgurteinheit 122a ist als ein Dreipunktgurt ausgebildet. Die Dreipunktgurteinheit 122a umfasst einen Schultergurt 124a und einen Beckengurt 126a. Der Beckengurt 126a ist dazu vorgesehen, den Passagier in einem Becken- und Hüftbereich zu sichern. Der Beckengurt 126a ist in einem geschlossenen Zustand der Dreipunktgurteinheit 122a dazu vorgesehen, den Sitzboden 36a zu überspannen. Der Beckengurt 126a ist dazu vorgesehen, dass der Passagier in einem geschlossenen Zustand der Dreipunktgurteinheit 122a mit einem Becken- und Schoßbereich zwischen dem Sitzboden 36a und dem Beckengurt 126a angeordnet ist. Der Schultergurt 124a ist dazu vorgesehen, einen Oberkörper des Passagiers an dem Flugzeugsitz 34a zu sichern. Der Schultergurt 124a ist insbesondere dazu vorgesehen, zur Sicherung des Passagiers auf dem Flugzeugsitz 34a von einem oberen Bereich der Rückenlehne 38a quer über eine Rückenlehnenfläche der Rückenlehne 38a an ein unteres Ende der Rückenlehne 38a zu verlaufen. Der Schultergurt 124a verläuft in einem geschlossenen Zustand der Dreipunktgurteinheit 122a quer über einen Torso des Passagiers, so dass dieser gesichert ist. Der Schultergurt 124a ist auf einer rechten Seite der Rückenlehne 38a in einem oberen Bereich angeordnet. Der Schultergurt 124a ist an einer dem Mittelgang 20a zugewandten Seite der Rückenlehne 38a angeordnet. Der Schultergurt 124a ist auf einer, einer Front der Flugzeugkabine 12a zugewandten Seite der Rückenlehne 38a angebracht.

Zur Anbindung der Dreipunktgurteinheit 122a an den Flugzeugsitz 34a weist die Dreipunktgurteinheit 122a eine Anbindungseinheit auf. Die Anbindungseinheit ist dazu vorgesehen, die Dreipunktgurteinheit 122a betriebssicher und fest an den Flugzeugsitz 34a anzubinden. Die Anbindungseinheit weist einen ersten Anbindungspunkt auf, an dem der Beckengurt 126a mit einem ersten Ende an dem Grundgestell des Flugzeugsitzes 34a angebunden ist. Über einen zweiten Anbindungspunkt ist der Beckengurt 126a mit seinem zweiten Ende an dem Grundgestell des Flugzeugsitzes 34a angebunden. Die Dreipunktgurteinheit 122a weist ein nicht näher dargestelltes Gurtschloss auf, über das der Beckengurt 126a geöffnet werden kann. In einem geschlossenen Zustand ist der Beckengurt 126a durch das Gurtschloss geschlossen. Ein dritter Anbindungspunkt der Dreipunktgurteinheit 122a ist in einem oberen Bereich der Rückenlehne 38a angeordnet. Über den dritten Anbindungspunkt ist der Schultergurt 124a fest mit einer tragenden Struktur der Rückenlehne 38a verbunden. Der Schultergurt 124a ist zum Schließen der Dreipunktgurteinheit 122a dazu vorgesehen, mit dem mit dem Beckengurt 126a verbundenen Gurtschloss gekoppelt zu werden. Dazu weist der Schultergurt 124a an seinem losen Ende ein Koppelelement auf, das mit einem Formschlusselement des Gurtschlosses formschlüssig koppelbar ist. Die Dreipunktgurteinheit 122a weist eine Gurtspanneinheit auf, die in dem dritten Anbindungspunkt des Schultergurts 124a integriert ist. Die Gurtspanneinheit ist dazu vorgesehen, den Schultergurt 124a, insbesondere in einem Crashfall zu spannen. Durch die Dreipunkhalteeinheit 122a kann ein auf dem Flugzeugsitz 34a sitzender Passagier besonders vorteilhaft gesichert werden, da ein Verdrehen eines Torsos eines Passagiers oder Crashtestdummies in einem Crashfall oder Crashtest minimiert, bzw. vorteilhaft verhindert werden kann. Insbesondere eine Verdrehung eines Schulterbereichs des Passagiers kann durch die Dreipunkthalteinheit 122a vorteilhaft verhindert werden. Grundsätzlich ist es auch denkbar, dass die Dreipunktgurteinheit 122a auf eine andere, dem Fachmann als sinnvoll erscheinende Weise ausgebildet ist, insbesondere ein anderes Gurtschloss oder andere Anbindungspositionen an dem Flugzeugsitz 34a aufweist.

Der Flugzeugsitz 34a ist dazu vorgesehen, in einem Winkel α von über 35 Grad in der Flugzeugkabine 12a montiert zu werden. Vorzugsweise ist der Flugzeugsitz 34a in einem Winkel α von 35 Grad bis 80 Grad in der Flugzeugkabine 12a montiert. In dem gezeigten Ausführungsbeispiel ist der Flugzeugsitz 34a in einem Winkel α von 55 Grad in der Flugzeugkabine 12a montiert. Der Flugzeugsitz 34a bildet eine längs verlaufende Mittelachse 46a auf. Die Mittelachse 46a teilt den Flugzeugsitz 34a mittig. Die längs verlaufende Mittelachse 46a verläuft parallel zu einer Aufständerebene des Flugzeugsitzes 34a. Der Winkel α, in dem der Flugzeugsitz 34a in der Flugzeugkabine 12a montiert ist, ist zwischen der Flugzeugkabinenmittelachse 18a und der längs verlaufenden Mittelachse 46a des Flugzeugsitzes 34a gemessen. Der Flugzeugsitz 34a ist um den Winkel α zu der Flugzeugkabinenmittelachse 18a verdreht montiert.

Der Flugzeugsitz 34a weist eine Sitzrichtung 48a auf. Die Sitzrichtung 48a verläuft parallel zu der längs verlaufenden Mittelachse 46a des Flugzeugsitzes 34a. Die Sitzrichtung 48a verläuft im Wesentlichen parallel zu dem Kabinenboden 32a und steht im Wesentlichen senkrecht zu einer von der Rückenlehne 38a ausgebildeten Rückenlehnenfläche in der TTL-Stellung des Flugzeugsitzes 34a. Die Sitzrichtung 48a ist von der Rückenlehnenfläche der Rückenlehne 38a weg gerichtet. Die Sitzrichtung 48a ist als eine Richtung ausgebildet, in die ein Passagier ausgerichtet ist, wenn er ordnungsgemäß auf dem Flugzeugsitz 34a sitzt. Der Flugzeugsitz 34a ist in montiertem Zustand von dem Mittelgang 20a der Flugzeugkabine 12a weg gerichtet. Der Flugzeugsitz 34a ist auf die Bordwand 14a der Flugzeugkabine 12a zugerichtet. Die Sitzrichtung 48a des Flugzeugsitzes 34a zeigt von dem Mittelgang 20a weg in Richtung der Bordwand 14a. Vorzugsweise ist das Flugzeugsitzmodul 24a mit seinem Flugzeugsitz 34a so angeordnet, dass die Sitzrichtung 48a des Flugzeugsitzes 34a auf das Fenster 50a in der Bordwand 14a ausgerichtet ist. Der Flugzeugsitz 34a ist vorzugsweise direkt auf das Fenster 50a in der Bordwand 14a ausgerichtet. Dadurch kann eine besonders vorteilhafte Ausrichtung des Flugzeugsitzes 34a erreicht werden, bei der ein auf dem Flugzeugsitz 34a sitzender Passagier eine vorteilhafte Sicht aus dem Fenster 50a der Bordwand 14a hat.

Die Flugzeugsitzmodule 24a, 28a der Flugzeugsitzanordnung 10a sind in einem Sitzabstand X (Pitch) zueinander in der Flugzeugkabine 12a angeordnet. Alle Flugzeugsitzmodule 24a, 28a der Flugzeugsitzanordnung 10a weisen vorzugsweise jeweils den gleichen Sitzabstand zu dem jeweils direkt benachbarten Flugzeugsitzmodul 24a, 28a der Flugzeugsitzanordnung 10a auf. Der Sitzabstand X ist ein parallel zur Flugzeugkabinenmittelachse 18a gemessener Abstand zwischen den benachbarten Flugzeugsitzmodulen 24a, 28a, insbesondere zwischen entsprechenden gleichen Bauteilen der beiden Flugzeugsitzmodule 24a, 28a. Beispielhaft ist der Sitzabstand zwischen den beiden Flugzeugsitzmodulen 24a, 28a zwischen den Flugzeugsitzen 34a der jeweiligen benachbarten Flugzeugsitzmodule 24a, 28a als Sitzabstand X gezeigt. Der Sitzabstand X ist als ein parallel zu der Flugzeugkabinenmittelachse 18a gemessener Abstand zwischen den Flugzeugsitzmittelpunkten der jeweiligen Flugzeugsitze 34a der Flugzeugsitzmodule 24a, 28a. Der Sitzabstand X zwischen den benachbarten Flugzeugsitzmodulen 24a, 28a kann vorzugsweise zwischen 838 mm (33 Zoll) und 1016 mm (40 Zoll) betragen. Vorzugsweise weisen die Flugzeugsitzmodule 24a, 28a der Flugzeugsitzanordnung 22a einen Sitzabstand X von 989 mm (35 Zoll) auf. Dieser kurze Sitzabstand X ist insbesondere durch die starke Neigung der Flugzeugsitze 34a um den Winkel α von 30 bis 80 Grad erreichbar.

Der als Full-Flat-Sitz ausgebildete Flugzeugsitz 34a des Flugzeugsitzmoduls 24a bildet in seiner Liegestellung eine besonders komfortabel lange Liegefläche auf. Die Liegefläche des Flugzeugsitzes 34a in seiner Liegestellung weist eine Liegeflächenlänge von 2006 mm (79 Zoll) auf. Grundsätzlich ist es denkbar, dass die Flugzeugsitze 34a in ihrer Liegestellung eine Liegeflächenlänge von 1905 mm (75 Zoll) bis 2032 mm (80 Zoll) aufweisen, je nach Winkel α, in dem die Flugzeugsitze 34a der Flugzeugsitzmodule 24a, 28a in der Flugzeugkabine 12a ausgerichtet sind. Bei einem Winkel α von 65 Grad kann eine Liegeflächenlänge von 2006 mm (79 Zoll) bei einem Sitzabstand X von 989 mm (35 Zoll) erreicht werden. Dadurch kann bei einer guten Packungsdichte der Flugzeugsitzmodule 24a, 28a durch einen kurzen Sitzabstand X durch die Schrägstellung der Flugzeugsitze 34a um den Winkel α eine besonders vorteilhaft lange Liegeflächenlänge erreicht werden. Dadurch kann das Flugzeugsitzmodul 24a, 28a besonders komfortabel ausgebildet werden.

Das erste Flugzeugsitzmodul 24a weist eine Umhausungseinheit 52a auf. Die Umhausungseinheit 52a ist dazu vorgesehen, den Flugzeugsitzbereich 26a des ersten Flugzeugsitzmoduls 24a zumindest teilweise zu begrenzen. Die Umhausungseinheit 52a weist ein erstes Umhausungselement 54a auf. Das Umhausungselement 54a ist als ein Wandelement ausgebildet. Das Umhausungselement 54a erstreckt sich in einem montierten Zustand von dem Kabinenboden 32a bis in einen Bereich oberhalb der Rückenlehne 38a in einer TTL-Stellung des Flugzeugsitzes 34a. Das Umhausungselement 54a ist beispielsweise von Kunststoff oder Kunststoffverbundplatten gebildet. Das erste Umhausungselement 54a erstreckt sich seitlich des Flugzeugsitzes 34a. Das erste Umhausungselement 54a erstreckt sich von dem Flugzeugsitz 34a in Richtung der Bordwand 14a. Das erste Umhausungselement 54a begrenzt den Flugzeugsitzbereich 26a des ersten Flugzeugsitzmoduls 24a zu einer ersten linken Seite hin im Bereich des Flugzeugsitzes 34a und in dem Bereich vor dem Flugzeugsitz 34a. Das erste Umhausungselement 54a verläuft in einem Bereich vor dem Flugzeugsitz 34a parallel zu einer Sitzrichtung 48a des Flugzeugsitzes 34a. Das erste Umhausungselement 54a weist einen vorderen Teilbereich auf, der parallel zu einer Sitzrichtung 48a des Flugzeugsitzes 34a ausgerichtet ist. Das erste Umhausungselement 54a erstreckt sich mit seinem gangentfernten Ende bis kurz vor die Bordwand 14a. In einem montierten Zustand ist zwischen dem gangentfernten Ende des ersten Umhausungselements 54a und der Bordwand 14a ein Abstand vorhanden. Grundsätzlich ist es denkbar, dass durch den Abstand in dem montierten Zustand ein Spalt zwischen dem gangentfernten Ende des ersten Umhausungselements 54a und der Bordwand 14a vorhanden bleibt. Vorzugsweise ist zwischen dem gangentfernten Ende des ersten Umhausungselements 54a und der Bordwand 14a ein Zwischenelement angeordnet, das den durch den Abstand gebildeten Spalt verschließt. Das nicht näher dargestellte Zwischenelement ist vorzugsweise als ein elastisches Element ausgebildet, das mit dem Umhausungselement 54a fest verbunden ist und durch seine Elastizität an eine aufgrund von Fertigungstoleranzen mögliche Varianz des Spaltes einfach anpassbar ist. Das erste Umhausungselement 54a weist einen hinteren Teilbereich auf, in dem das erste Umhausungselement 54a zu dem vorderen Teilbereich gekrümmt ausgebildet ist. Der hintere Teilbereich des ersten Umhausungselements 54a ist im Bereich des Flugzeugsitzes 34a angeordnet. Der hintere Teilbereich des ersten Umhausungselements 54a ist in Richtung des Flugzeugsitzes 34a gekrümmt und erstreckt sich bis in einen Bereich hinter den Flugzeugsitz 34a. Der vordere Teilbereich und der hintere Teilbereich des ersten Umhausungselements 54a sind vorzugsweise einstückig ausgebildet. Grundsätzlich wäre auch eine mehrteilige Ausgestaltung des ersten Umhausungselements 54a aus mehreren miteinander verbundenen Einzelelementen denkbar. Die Umhausungseinheit 52a weist ein zweites Umhausungselement 56a auf. Das zweite Umhausungselement 56a ist als ein Wandelement ausgebildet. Das Umhausungselement 56a erstreckt sich in einem montierten Zustand von dem Kabinenboden 32a bis in einen Bereich oberhalb der Rückenlehne 38a in einer TTL-Stellung des Flugzeugsitzes 34a. Das zweite Umhausungselement 56a erstreckt sich hinter dem Flugzeugsitz 34a. Das zweite Umhausungselement 56a trennt den Flugzeugsitzbereich 26a zu dem Mittelgang 20a hin ab. Das zweite Umhausungselement 56a ist mit dem ersten Umhausungselement 54a verbunden. Die Umhausungseinheit 52a ist in einem Bereich vor dem Flugzeugsitz 34a gerade ausgebildet und verläuft schräg zu der Flugzeugkabinenmittelachse 18a. Der gerade Teil der Umhausungseinheit 52a ist insbesondere von dem ersten Umhausungselement 54a der Umhausungseinheit 52a ausgebildet. In einem Bereich des Flugzeugsitzes 34a ist die Umhausungseinheit 52a C-förmig ausgebildet. Dabei verläuft die Umhausungseinheit 52a neben dem Flugzeugsitz 34a im Wesentlichen orthogonal zu der Flugzeugkabinenmittelachse 18a. Der orthogonal zu der Flugzeugkabinenmittelachse 18a verlaufende Bereich der Umhausungseinheit 52a ist dabei vorzugsweise ebenfalls von dem ersten Umhausungselement 54a gebildet. In einem Bereich hinter dem Flugzeugsitz 34a und angrenzend an den Mittelgang 20a verläuft die Umhausungseinheit 52a im Wesentlichen parallel zu der Flugzeugkabinenmittelachse 18a. Der parallel zu der Flugzeugkabinenmittelachse 18a verlaufende Bereich der Umhausungseinheit 52a ist dabei vorzugsweise von dem zweiten Umhausungselement 56a gebildet.

Das Flugzeugsitzmodul 24a kann ein Türelement 128a aufweisen. Das Türelement 128a ist verschiebbar an dem zweiten Umhausungselement 56a der Umhausungseinheit 52a angeordnet. Das Türelement 128a ist über eine nicht näher dargestellte Lagereinheit an dem zweiten Umhausungselement 56a linear verschiebbar gelagert. Das Türelement 128a kann zwischen einer geöffneten und einer geschlossenen Stellung verstellt werden. In der geöffneten Stellung ist das Türelement 128a in dem zweiten Umhausungselement 56a der Umhausungseinheit 52a angeordnet. In der geöffneten Stellung gibt das Türelement 128a den Durchgangsbereich zu dem Flugzeugsitzbereich 26a frei. Der Durchgangsbereich des Flugzeugsitzbereichs 26a weist eine Breite von 381 mm (15 Zoll) auf. In der geschlossenen Stellung ist das Türelement 128a aus dem zweiten Umhausungselement 56a herausbewegt. In der geschlossenen Stellung verschließt das Türelement 128a den Durchgangsbereich zu dem Flugzeugsitzbereich 26a des Flugzeugsitzmoduls 24a. Grundsätzlich ist es auch denkbar, dass das Flugzeugsitzmodul 24a kein Türelement 128a aufweist, wodurch ein Durchgangsbereich zu dem Flugzeugsitzbereich 26a ständig frei bleibt. Grundsätzlich ist es ebenso denkbar, dass das an dem zweiten Umhausungselement 56a der Umhausungseinheit 52a verschiebbar gelagerte Türelement 128a dazu vorgesehen ist, einen Durchgangsbereich zu einem neben dem Flugzeugsitzmodul 24a, insbesondere hinter dem Flugzeugsitzmodul 24a angeordneten Flugzeugsitzbereich zu verschließen. Dazu wäre es denkbar, dass das beweglich gelagerte Türelement 128a von dem zweiten Umhausungselement 56a aus, in eine Richtung weg von dem vor dem Flugzeugsitzmodul 24a angeordneten Flugzeugsitzmodul 28a in Richtung des dahinter angeordneten Flugzeugsitzmoduls verschiebbar gelagert ist.

Das zweite Flugzeugsitzmodul 28a weist einen Flugzeugsitz 58a auf. Der Flugzeugsitz 58a ist gleich ausgebildet wie der Flugzeugsitz 32a des ersten Flugzeugsitzmoduls 24a. Der Flugzeugsitz 58a ist ebenfalls als ein Full-Flat-Sitz ausgebildet. Der Flugzeugsitz 58a ist dazu vorgesehen, in einem Winkel α von über 35 Grad in der Flugzeugkabine 12a montiert zu werden. Der Flugzeugsitz 58a ist um den Winkel α von 55 Grad zu der Flugzeugkabinenmittelachse 18a verdreht montiert. Der Flugzeugsitz 58a ist auf die Bordwand 14a der Flugzeugkabine 12a zugerichtet. Eine Sitzrichtung des Flugzeugsitzes 58a zeigt von dem Mittelgang 20a weg in Richtung der Bordwand 14a. Der Flugzeugsitz 58a des zweiten Flugzeugsitzmoduls 28a ist parallel zu dem Flugzeugsitz 32a des ersten Flugzeugsitzmoduls 24a ausgerichtet.

Das unmittelbar benachbart zu dem ersten Flugzeugsitzmodul 24a angeordnete weitere Flugzeugsitzmodul 28a weist ebenfalls eine Umhausungseinheit 60a auf. Die Umhausungseinheit 60a begrenzt den Flugzeugsitzbereich 30a des zweiten Flugzeugsitzmoduls 28a teilweise. Die Umhausungseinheit 60a ist im Wesentlichen gleich ausgebildet wie die Umhausungseinheit 52a des ersten Flugzeugsitzmoduls 24a, weswegen die Umhausungseinheit 60a im Folgenden nicht im Detail beschrieben werden soll. Die Umhausungseinheit 60a des zweiten Flugzeugsitzmoduls 28a weist gleichermaßen ausgebildete Umhausungselemente auf. Die Umhausungseinheit 60a des zweiten Flugzeugsitzmoduls 28a trennt den Flugzeugsitzbereich 26a des ersten Flugzeugsitzmoduls 24a von dem Flugzeugsitzbereich 30a des zweiten Flugzeugsitzmoduls 28a ab. Die Umhausungseinheit 60a des zweiten Flugzeugsitzmoduls 28a erstreckt sich zwischen den beiden Flugzeugsitzbereichen 26a, 30a der beiden nebeneinander angeordneten Flugzeugsitzmodule 24a, 28a. Eine Außenseite 62a der Umhausungseinheit 60a des zweiten Flugzeugsitzmoduls 28a ist dem Flugzeugsitzbereich 26a des ersten Flugzeugsitzmoduls 24a zugewandt. Eine Innenseite der Umhausungseinheit 60a des zweiten Flugzeugsitzmoduls 28a ist dem Flugzeugsitzbereich 30a des zweiten Flugzeugsitzmoduls 28a zugewandt. Der Flugzeugsitzbereich 26a des ersten Flugzeugsitzmoduls 24a ist auf der einen, linken Seite durch die Umhausungseinheit 52a des ersten Flugzeugsitzmoduls 24a und auf einer gegenüberliegenden, rechten Seite durch die Umhausungseinheit 60a des zweiten Flugzeugsitzmoduls 28a begrenzt.

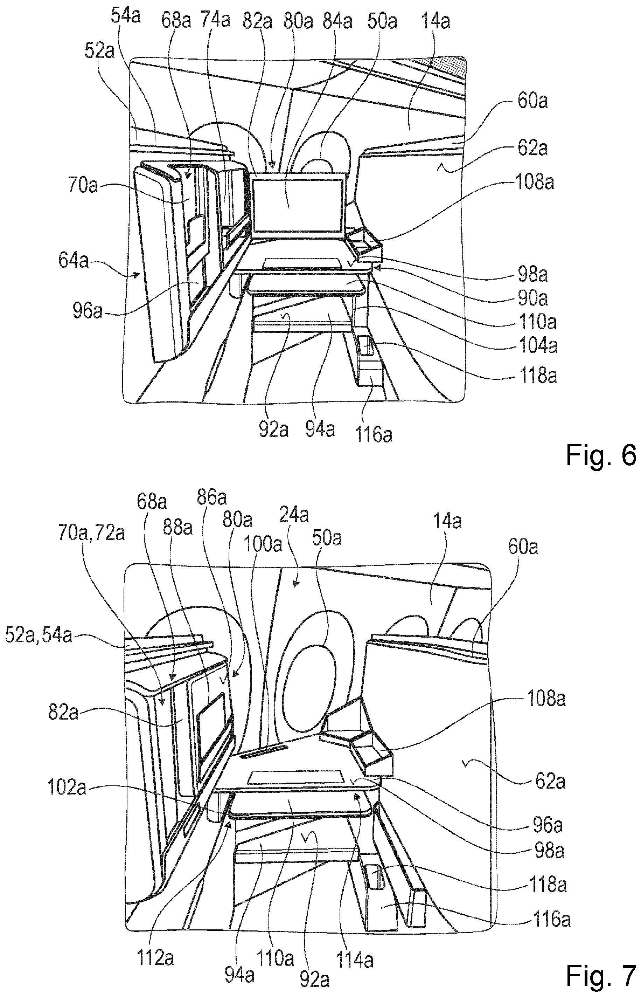

Das erste Flugzeugsitzmodul 24a weist eine erste Konsoleneinheit 64a auf. Die Konsoleneinheit 64a ist an einer Innenseite 66a der Umhausungseinheit 52a des ersten Flugzeugsitzmoduls 24a angebracht. Die Konsoleneinheit 64a ist in einem Bereich vor dem Flugzeugsitz 34a angeordnet. Die Konsoleneinheit 64a bildet eine Verstaumöglichkeit 68a aus. Die Verstaumöglichkeit 68a ist dazu vorgesehen, verschiedene Utensilien aufzunehmen. In der Verstaumöglichkeit 68a können unterschiedliche Utensilien, insbesondere während eines Fluges, verliersicher verstaut werden. Dazu weist die Verstaumöglichkeit 68a vorzugsweise unterschiedliche Staufächer, Ablageelemente und Befestigungsmittel, wie beispielsweise Gummibänder oder Haken auf. In Figur 6 ist beispielhaft dargestellt wie eine Verstaumöglichkeit 68a mit zwei vorderen Staufächern 70a, 72a und einem hinteren Staufach 74a ausgebildet sein kann. Die Konsoleneinheit 64a ist mit der Verstaumöglichkeit 68a, welche die Staufächer 70a, 72a, 74a ausbildet, auf der Innenseite 66a der Umhausungseinheit 52a montiert. Grundsätzlich wäre es auch denkbar, dass die Konsoleneinheit 64a und damit auch die Verstaumöglichkeit 68a mit ihren Staufächern 70a, 72a, 74a teilweise in die Umhausungseinheit 52a eingelassen ist. Die Konsoleneinheit 64a weist vorzugsweise weitere Funktionseinheiten 76a, 78a auf. Die erste Funktionseinheit 76a ist als eine Steckereinheit ausgebildet. Die als Steckereinheit ausgebildete Funktionseinheit 76a umfasst mehrere Steckerelemente. Die Steckerelemente sind beispielsweise als Stromstecker, als USB-Stecker, oder als ein anderes dem Fachmann als sinnvoll erscheinendes Steckerelement ausgebildet. Über die Steckerelemente kann ein Passagier vorzugsweise eine Datenverbindung zu einem Entertainmentsystem aufbauen, oder ein elektronisches Gerät laden. Die weitere Funktionseinheit 78a ist als eine Bedieneinheit ausgebildet. Das als Bedieneinheit ausgebildete Funktionseinheit 78a ist dazu vorgesehen, dass ein Passagier Funktionen des Flugzeugsitzes 34a oder eines Entertainmentsystems steuern kann. Die als Bedieneinheit ausgebildete Funktionseinheit 78a kann als ein Touchpanel, ein Touchscreen, als eine Fernbedienung oder als ein anderes Bedienelement ausgebildet sein.

Das erste Flugzeugsitzmodul 24a weist eine Monitoreinheit 80a auf. Die Monitoreinheit 80a ist verschwenkbar an der Innenseite 66a der Umhausungseinheit 52a angebunden. Die Monitoreinheit 80a ist in einem vorderen Bereich der Umhausungseinheit 52a angebracht. Die Monitorreinheit 80a ist an einem vorderen Bereich der Konsoleneinheit 64a angebracht. Vorteilhaft ist die Monitoreinheit 80a in die Konsoleneinheit 64a integriert. Die Monitoreinheit 80a umfasst ein Befestigungsgehäuse 82a. Das Befestigungsgehäuse 82a ist an der Umhausungseinheit 52a angebunden. Die Monitoreinheit 80a weist einen Bildschirm 84a auf. Der Bildschirm 84a ist in dem Befestigungsgehäuse 82a montiert. Die Monitoreinheit 80a weist eine Lagervorrichtung auf, über die die Monitoreinheit 80a verschwenkbar an der Umhausungseinheit 52a angebunden ist. Die Lagervorrichtung umfasst zumindest ein Schwenklager, das beispielsweise als ein Scharnier ausgebildet ist und zwischen der Umhausungseinheit 52a und dem Befestigungsgehäuse 82a der Monitoreinheit 80a angeordnet ist. Über die Lagervorrichtung lässt sich die Monitoreinheit 80a zwischen einer Verstaustellung und einer Gebrauchsstellung verschwenken. In der Verstaustellung ist die Monitoreinheit 80a so an die Umhausungseinheit 52a angeklappt, wobei der Bildschirm 84a in Richtung der Umhausungseinheit 52a ausgerichtet ist. Die Monitoreinheit 80a überdeckt in der Verstaustellung zumindest einen Teil der Konsoleneinheit 64a. Die Monitoreinheit 80a überdeckt in der Verstaustellung insbesondere das Staufach 74a der Konsoleneinheit 64a. Dadurch kann in einem geschlossenen Zustand der Monitoreinheit 80a das Staufach 74a der Konsoleneinheit 64a vorteilhaft verschlossen werden.

Die Monitoreinheit 80a weist eine Rückseite 86a auf. Die Rückseite 86a der Monitoreinheit 80a ist von einer Rückseite des Befestigungsgehäuses 82a ausgebildet. In der Verstaustellung der Monitoreinheit 80a ist die Rückseite 86a dem Flugzeugsitzbereich 26a zugewandt. Die Rückseite 86a der Monitoreinheit 80a ist in der Verstaustellung von der Umhausungseinheit 52a abgewandt. In der Gebrauchsstellung ist die Rückseite 86a der Monitoreinheit 80a der Bordwand 14a zugewandt. Auf der Rückseite 86a der Monitoreinheit 80a ist ein Befestigungsmittel 88a zur Verstauung von Utensilien angeordnet. Das Befestigungsmittel 88a ist beispielhaft als eine Literaturtasche ausgebildet. Das als Literaturtasche ausgebildete Befestigungsmittel 88a ist dazu vorgesehen, dass Utensilien, wie insbesondere Literatur in ihr verliersicher aufbewahrt werden können. Das als Literaturtasche ausgebildete Befestigungsmittel 88a ist von einem Hohlraum gebildet, der von dem Befestigungsgehäuse 82a teilweise begrenzt ist. Das als Literaturtasche ausgebildete Befestigungsmittel 88a ist von einem Hohlraum gebildet, der nach oben hin geöffnet ist. Grundsätzlich ist es auch denkbar, dass das Befestigungsmittel 88a als ein Staufach, ein Befestigungshaken, ein Spannelement oder ein Regalelement ausgebildet ist. Vorzugsweise ist es auch denkbar, dass auf der Rückseite 86a der Monitoreinheit 80a mehrere Befestigungsmittel 88a vorgesehen sind.

Das erste Flugzeugsitzmodul 24a weist eine weitere Konsoleneinheit 90a auf. Die weitere Konsoleneinheit 90a ist frontal vor dem Flugzeugsitz 34a des ersten Flugzeugsitzmoduls 26a angeordnet. Die weitere Konsoleneinheit 90a ist an der Umhausungseinheit 52a des ersten Flugzeugsitzmoduls 24a angebunden. Die weitere Konsoleneinheit 90a erstreckt sich bis kurz vor die Außenseite 62a der Umhausungseinheit 60a des zweiten Flugzeugsitzmoduls 28a. Die weitere Konsoleneinheit 90a ist an der ersten Umhausungseinheit 52a montiert. Die weitere Konsoleneinheit 90a ist nicht direkt mit der Umhausungseinheit 60a des zweiten Flugzeugsitzmoduls 28a verbunden. Die weitere Konsoleneinheit 90a weist ein nicht näher dargestelltes Grundgestell auf. Über das Grundgestell ist die weitere Konsoleneinheit 90a mit dem Kabinenboden 32a verbunden. Das Grundgestell kann einen Träger und ein oder mehrere Befestigungselemente umfassen, mittels denen das Grundgestell mit dem Kabinenboden 32a, insbesondere Führungsschienen im Kabinenboden 32a gekoppelt ist. Die weitere Konsoleneinheit 90a weist ein Bodenelement 106a auf. Das Bodenelement 106a bildet einen Grundboden der weiteren Konsoleneinheit 90a aus. Das Bodenelement 106a ist als ein Verkleidungselement ausgebildet, das das Grundgestell der weiteren Konsoleneinheit 90a umgibt. Das Bodenelement 106a verdeckt das Grundgestell der weiteren Konsoleneinheit 90a. Die weitere Konsoleneinheit 90a ist in einer Draufsicht im Wesentlichen als ein Parallelogramm ausgebildet. Dadurch kann die weitere Konsoleneinheit 90a in dem vorderen, der Bordwand 14a zugewandten Bereich des Flugzeugsitzbereichs 26a besonders vorteilhaft integriert werden.

Die weitere Konsoleneinheit 90a weist einen Fußablagebereich 92a aus. Der Fußablagebereich 92a ist von einem starren Auflageelement 94a gebildet. Das starre Auflageelement 94a bildet eine gegenüber der Aufständerebene erhöhte Fläche aus. Das den Fußablagebereich 92a ausbildende Auflageelement 94a ist oberhalb des Bodenelements 106a angeordnet. Zwischen dem den Fußablagebereich 92a ausbildenden Auflageelement 94a und dem Bodenelement 106a ist ein Zwischenraum vorhanden. Der Zwischenraum zwischen dem Bodenelement 106a und dem Auflageelement 94a ist vorzugsweise als ein Stauraum, insbesondere für Handgepäck ausgebildet. In dem Stauraum zwischen dem Bodenelement 106a und dem Auflageelement 94a sind vorzugsweise Befestigungsmittel, beispielsweise ein Netzelement oder ein Spannelement zur Sicherung von Handgepäck vorgesehen. Der Fußablagebereich 92a weist ein Polsterelement auf, das eine Auflagefläche des starren Auflageelements 94a ausbildet. Der Fußablagebereich 92a erweitert die von dem Flugzeugsitz 34a in der Liegestellung bereitgestellte Liegefläche 42a. Der Flugzeugsitz 34a, also die Rückenlehne 38a, der Sitzboden 36a, das Beinstützelement 40a und das den Fußablagebereich 92a bildende starre Auflageelement 94a bilden in der Liegeposition des Flugzeugsitzes 34a die ebene Liegefläche 42a aus. Grundsätzlich wäre es auch denkbar, dass der Flugzeugsitz 34a kein Beinstützelement 40a aufweist.

Die weitere Konsoleneinheit 90a weist ein fixiertes Tischelement 96a auf. Das fixierte Tischelement 96a ist oberhalb des Fußablagebereichs 92a angeordnet. Das fixierte Tischelement 96a überdeckt das den Fußablagebereich 92a ausbildende Auflageelement 94a. Das fixierte Tischelement 96a begrenzt den Fußablagebereich 92a nach oben. Das fixierte Tischelement 96a ist starr in dem Flugzeugsitzbereich 26a montiert. Das fixierte Tischelement 96a ist nicht verstellbar. Das fixierte Tischelement 96a ist auf einer ersten Seite fest mit der Umhausungseinheit 52a des ersten Flugzeugsitzmoduls 24a verbunden. Die fixierte Tischeinheit 96a ist starr an dem Umhausungselement 54a der Umhausungseinheit 52a montiert. Das fixierte Tischelement 96a weist eine Vorderkante 102a auf, die orthogonal zu der Sitzrichtung 48a des Flugzeugsitzes 34a ausgerichtet ist. Die Vorderkante 102a schließt das fixierte Tischelement 96a in Richtung des Flugzeugsitzes 34a ab. Das fixierte Tischelement 96a ist mit seiner Vorderkante 102a genau dem Flugzeugsitz 34a zugewandt. Das fixierte Tischelement 96a bildet aus seiner Oberseite eine ebene Tischfläche 98a aus. Die ebene Tischfläche 98a des fixierten Tischelements 96a ist dazu vorgesehen, von einem Passagier des Flugzeugsitzbereichs 26 als Ablagefläche genutzt zu werden. Vorzugsweise ist es denkbar, dass in die ebene Tischfläche 98a Aufnahmevertiefungen eingebracht sind, in denen Utensilien teilweise aufgenommen werden können. Vorzugsweise ist es ebenso denkbar, dass das fixierte Tischelement 96a auf seiner ebenen Tischfläche 98a in einem hinteren Bereich angebrachte Befestigungsmittel 100a umfasst. Der hintere Bereich ist als ein Bereich des fixierten Tischelements 96a zu verstehen, der in einer Gebrauchsstellung der Monitoreinheit 80a in Sitzrichtung 48a gesehen, hinter der Monitoreinheit 80a angeordnet ist. Durch die Befestigungsmittel 100a kann der hintere Bereich als ein zusätzlicher Staubereich für Handgepäck ausgebildet werden. Die Befestigungsmittel 100a sind beispielsweise als Spanngurte, beispielsweise elastische Spanngurte ausgebildet.

Die weitere Konsoleneinheit 90a weist ein Abstützelement 104a auf. Das Abstützelement 104a ist dazu vorgesehen, die fixierte Tischeinheit an einer zweiten, der Umhausungseinheit 52a des ersten Flugzeugsitzmoduls 24a abgewandten Seite abzustützen. Das Abstützelement 104a ist als ein Vertikalträger ausgebildet. Das Abstützelement 104a ist mit einem oberen Ende an einer Unterseite des fixierten Tischelements 96a angebunden. Ein unteres Ende des Abstützelements 104a ist mit dem nicht näher dargestellten Grundgestell der weiteren Konsoleneinheit 90a verbunden. Über das Abstützelement 104a können auf das Tischelement 96a wirkende Kräfte in den Kabinenboden 32a abgeleitet werden. Das Abstützelement 104a ist dazu vorgesehen, das fixierte Tischelement 96a an dem Grundgell der Konsoleneinheit 90a und damit dem Kabinenboden 32a abzustützen. Dadurch kann die fixierte Tischeinheit besonders stabil ausgebildet werden. Das Abstützelement 104a auf einer der Umhausungseinheit 52a abgewandten Seite des Auflageelements 94a angebracht. Das Abstützelement 104a begrenzt das Auflageelement 94a und dadurch den Fußablagebereich 92a zumindest Teilweise auf der der Umhausungseinheit 52a abgewandten Seite.

Das erste Flugzeugsitzmodul 24a weist ein Regalelement 108a auf. Das Regalelement 108a ist an der Außenseite 62a der Umhausungseinheit 60a des zweiten Flugzeugsitzmoduls 28a angebunden. Das Regalelement 108a ist über geeignete Verbindungselemente fest mit der Umhausungseinheit 60a des zweiten Flugzeugsitzmoduls 28a verbunden. Beispielsweise kann das Regalelement 108a an die Außenseite 62a der Umhausungseinheit 60a angeschraubt sein. Das Regalelement 108a weist mehrere Ablagefächer auf, in denen Utensilien verliersicher angeordnet werden können. Die Ablagefächer des Regalelements 108a sind vorzugsweise wannenförmig ausgebildet. Das Regalelement 108a ist in einer Höhe unmittelbar oberhalb der von dem fixierten Tischelement 96a ausgebildeten Tischfläche 98a angeordnet. Das Regalelement 108a ist dazu vorgesehen, den Spalt zwischen der Umhausungseinheit 60a des zweiten Flugzeugsitzmoduls 28a und dem fixierten Tischelement 96a der weiteren Konsoleneinheit 90a zu überbrücken. Das Regalelement 108a erstreckt sich im Bereich des fixierten Tischelements 96a von der Außenseite 62a der Umhausungseinheit 60a des zweiten Flugzeugsitzmoduls 28a bis über die Tischfläche 98a des fixierten Tischelements 96a. Vorzugsweise liegt das Regalelement 108a in seinem vorderen, der Umhausungseinheit 60a abgewandten Bereich, mit einer Unterseite auf der Tischfläche 98a des fixierten Tischelements 96a auf. Dadurch kann sich das Regalelement 108a vorteilhaft an dem fixierten Tischelement 96a abstützen. Grundsätzlich ist es auch denkbar, dass zwischen der Tischfläche 98a des fixierten Tischelements 96a und der Unterseite des Regalelements 108a ein minimaler Spalt vorhanden ist. Der Spalt zwischen der Unterseite des Regalelements 108a und der Tischfläche 98a ist dabei vorteilhaft so klein, dass keine Utensilien hineinpassen.

Das erste Flugzeugsitzmodul 24a weist ein verstellbares Tischelement 110a auf. Das verstellbare Tischelement 110a ist linear verschiebbar zu der Umhausungseinheit 52a angeordnet. Das verstellbare Tischelement 10a ist relativ zu dem Flugzeugsitz 34a des Flugzeugsitzbereichs 26a verschiebbar. Dis verstellbare Tischelement 110a ist zwischen einer Verstaustellung und einer maximal ausgefahrenen Gebrauchsstellung verschiebbar. Das verstellbare Tischelement 110a ist parallel zur Sitzrichtung 48a zwischen der Verstaustellung und der Gebrauchsstellung verschiebbar. Die verstellbare Tischeinheit ist an einer Unterseite des fixierten Tischelements 96a verschiebbar angeordnet. Das verstellbare Tischelement 110a ist unmittelbar unterhalb des fixierten Tischelements 96a angeordnet. Das verstellbare Tischelement 110a ist linear verschiebbar. Das verstellbare Tischelement 110a ist an der Innenseite 66a der Umhausungseinheit 52a angebunden. Das verstellbare Tischelement 110a weist eine erste Lagereinheit 112a auf, über die das Tischelement 110a verschiebbar zu dem Umhausungselement 54a der Umhausungseinheit 52a gelagert ist. Über die Lagereinheit 112a ist das verstellbare Tischelement 110a an seiner ersten Seite gelagert. Die Lagereinheit 112a umfasst eine mit dem Umhausungselement 54a verbundene Führungsschiene. Ferner umfasst die Lagereinheit 112a ein an dem verstellbaren Tischelement 110a fest angeordnetes Lagerelement, das in der an dem Umhausungselement 54a angebundenen Führungsschiene verschiebbar gelagert ist. Das verstellbare Tischelement 110a weist eine zweite Lagereinheit 114a auf, über die das verstellbare Tischelement 110a an dem fixierten Tischelement 96a verschiebbar befestigt ist. Die zweite Lagereinheit 114a ist an einem zweiten, der Umhausungseinheit 52a des ersten Flugzeugsitzmoduls 24a abgewandten Seite des verschiebbaren Tischelements 110a angeordnet. Die zweite Lagereinheit 114a weist ein erstes mit an der Unterseite des fixierten Tischelements 96a angeordnetes Lagerelement auf. Das Lagerelement ist vorzugsweise als eine Lagerschiene ausgebildet. Die zweite Lagereinheit 114a weist ein zweites, mit dem verstellbaren Tischelement 110a fest verbundenes Lagerelement auf. Das mit dem verstellbaren Tischelement 110a verbundene Lagerelement ist als eine Lagerschiene ausgebildet. Die beiden als Lagerschiene ausgebildeten Lagerelemente der zweiten Lagereinheit 114a sind zur verstellbaren Lagerung des Tischelements 110a verschiebbar miteinander verbunden. In seiner Verstaustellung ist das verstellbare Tischelement 110a vorzugsweise komplett unterhalb des fixierten Tischelements 96a angeordnet. In seiner maximal ausgefahrenen Gebrauchsstellung ist das verstellbare Tischelement 110a oberhalb des Sitzbodens 36a des Flugzeugsitzes 32a angeordnet, wenn sich dieser in seiner aufrechten Sitzstellung befindet. Das verstellbare Tischelement 110a ist vorzugsweise in der Verstaustellung und in der maximal verstellten Gebrauchsstellung arretierbar. Grundsätzlich ist es auch denkbar, dass die Tischeinheit in Zwischenpositionen arretierbar ist.

Das erste Flugzeugsitzmodul 24a weist ein Überbrückungselement 116a auf. Das Überbrückungselement 116a ist dazu vorgesehen, in einem montierten Zustand einen Spalt zwischen der weiteren Konsoleneinheit 90a und der Umhausungseinheit 60a des zweiten Flugzeugsitzmoduls 28a zu schließen. Das Überbrückungselement 116a ist zwischen der weiteren Konsoleneinheit 90a und der Umhausungseinheit 60a des zweiten Flugzeugsitzmoduls 28a angeordnet. Das Überbrückungselement 116a ist insbesondere dazu vorgesehen, in einem dem Kabinenboden 32a zugewandten Bodenbereich den Spalt zwischen der weiteren Konsoleneinheit 90a und der Umhausungseinheit 60a des zweiten Flugzeugsitzmoduls 28a zu schließen. Das Überbrückungselement 116a schließt den Spalt zwischen der weiteren Konsoleneinheit 90a und der Umhausungseinheit 60a des zweiten Flugzeugsitzmoduls 28a im Bereich des Bodenelements 106a. Das Überbrückungselement 116a ist als ein Abdeckelement ausgebildet. Das Überbrückungselement 116a bildet einen Aufbewahrungsbereich 118a aus. Der Aufbewahrungsbereich 118a ist als ein Flaschenhalter ausgebildet. Der Aufbewahrungsbereich 118a ist als eine Vertiefung ausgebildet. Der Aufbewahrungsbereich 118a ist als eine längliche Vertiefung mit einem rechteckigen Querschnitt ausgebildet. Der als Vertiefung ausgebildete Aufbewahrungsbereich 118a ist so ausgestaltet, dass Getränkeflaschen darin aufbewahrt werden können.

Das Flugzeugsitzmodul 24a ist für einen auf dem Flugzeugsitz 34a sitzenden Passagier besonders vorteilhaft sicher ausgebildet. Eine vor dem Flugzeugsitz 34a angeordnete Wandung des Flugzeugsitzbereichs 26a ist von der Umhausungseinheit 60a des vor dem Flugzeugsitzmodul 24a angeordneten Flugzeugsitzmoduls 28a ausgebildet. Die Umhausungseinheit 60a bildet in einem hinteren Bereich 138a neben dem Flugzeugsitz 34a eine Fläche aus, die im Wesentlichen orthogonal zu der Flugzeugkabinenmittelachse 18a ausgerichtet ist. Der hintere Bereich 138a ist als ein dem Mittelgang 20a zugewandter Bereich der Umhausungseinheit 60a ausgebildet. Der hintere Bereich 138a bildet einen möglichen Kopfaufschlagbereich für einen Passagier oder Crashtestdummy bei einem Crash oder Crashtest aus. Der hintere Bereich 138a befindet sich unmittelbar in Verzögerungsrichtung des Flugzeugsitzes 34a. Durch die Dreipunktgurteinheit 122a kann vorteilhaft ein Aufschlagen eines Kopfes eines Passagiers oder Crashtestdummies bei einem Crash oder Crashtest vorteilhaft abgemildert oder verhindert werden. Der hintere Bereich 138a kann zusätzlich als ein gepolsterter Bereich ausgebildet sein, um einen möglichen Aufprall zu dämpfen. Die Ausrichtung des hinteren Bereichs 138a relativ zu dem Flugzeugsitz 34a ist durch die Schrägstellung des Flugzeugsitzes 34a um den Winkel α besonders vorteilhaft.

Die Umhausungseinheit 60a bildet in einem vorderen Bereich 140a vor dem Flugzeugsitz 34a eine Fläche aus, die schräg zu der Flugzeugkabinenmittelachse 18a ausgerichtet ist. Der vordere Bereich 140a bildet einen Beinabstützbereich aus. Der vordere Bereich 140a ist zu dem hinteren Bereich 138a verkippt. Der vordere Bereich 140a ist dazu vorgesehen, dass sich die Beine eines auf dem Flugzeugsitz 34a sitzenden Passagiers oder Crashtestdummies in einem Crash oder bei einem Crashtest an dem vorderen Bereich 140a abstützen können. Die Beine eines auf dem Flugzeugsitz 34a sitzenden Passagiers oder Crashtestdummies treffen bei einem Crash oder Crashtest durch die wirkenden Beschleunigungen in dem als Beinabstützbereich ausgebildeten vorderen Bereich 140a auf. Dadurch kann ein Verdrehen des Passagiers verhindert werden. Dadurch kann auch ein Verdrehen des Torsos des Passagiers oder Crashtestdummies verringert werden. Dadurch können besonders vorteilhafte Crashtestergebnisse erzielt und ein besonders sicheres Flugzeugsitzmodul 24a bereitgestellt werden. Vorteilhaft könnte dadurch auch auf zusätzliche Sicherungssysteme, wie beispielsweise einen Airbag oder ähnliches verzichtet werden.

Vorzugsweise ist vor dem vordersten Flugzeugsitzmodul der Flugzeugsitzanordnung 10a ein Nutzbereich 130a angeordnet. Der Nutzbereich 130a ist zwischen einer Bordquerwand 132a, die einen Teil der Flugzeugkabine 12a, in dem die Flugzeugsitzanordnungen 10a, 22a angeordnet sind, abtrennt und dem vordersten Flugzeugsitzmodul angeordnet. Die Flugzeugsitzanordnung 10a weist ein vorderes Umhausungselement 134a auf. Das vordere Umhausungselement 134a ist im Wesentlichen gleich ausgebildet wie die ersten Umhausungselemente 54a der Umhausungseinheiten 52a, 60a der Flugzeugsitzmodule 24a, 28a. Das vordere Umhausungselement 134a begrenzt den Flugzeugsitzbereich des vordersten Flugzeugsitzmoduls der Flugzeugsitzanordnung 10a nach vorne. In dem Nutzbereich 130a zwischen der Bordquerwand 132a und dem vorderen Umhausungselement 134a ist ein Verstaubereich 136a angeordnet. Der Verstaubereich 136a weist vorzugsweise mehrere Verstaufächer auf, die zur Verstauung von Gegenständen vorgesehen sind. Beispielsweise kann der Verstaubereich 136a auch zur Verstauung von Utensilien einer Flugzeugcrew vorgesehen sein. Vorzugsweise kann der Verstaubereich 136a zur Verstauung von Handgepäck vorgesehen sein. Vorzugsweise kann der Verstaubereich 136a dem vorderen Flugzeugsitzmodul der Flugzeugsitzanordnung 10a zugesprochen werden. Vorzugsweise kann der Nutzbereich 130a auch zur Erweiterung des vordersten Flugzeugsitzmoduls der Flugzeugsitzanordnung 10a vorgesehen sein. Beispielsweise könnte der der Nutzbereich 130a zumindest teilweise zur Erweiterung des Flugzeugsitzbereichs genutzt werden, in dem das vordere Umhausungselement 134a verstell- oder entfernbar ausgebildet ist.

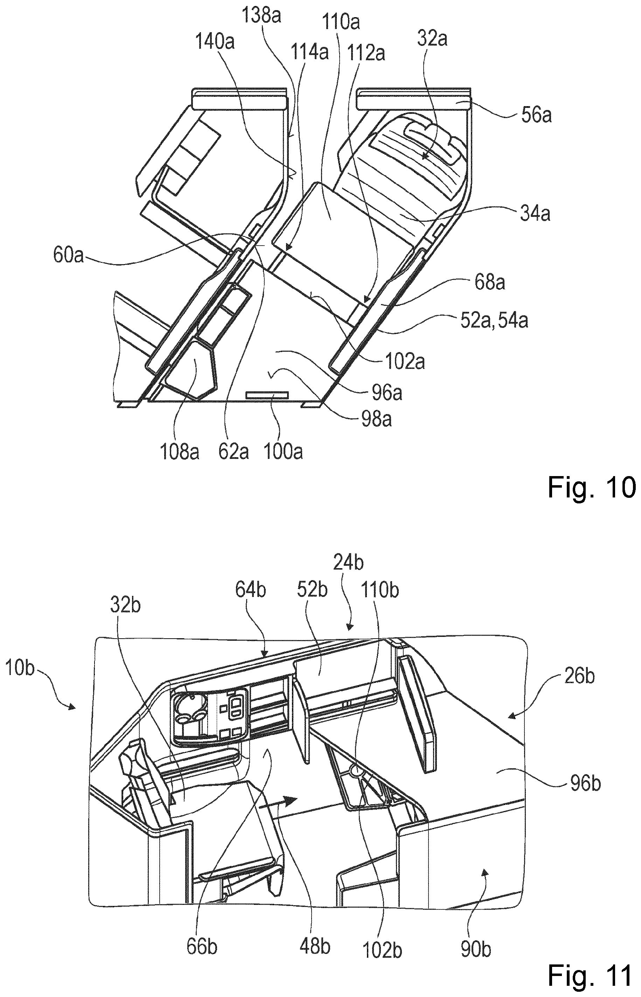

In der Fig. 11 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 10 verwiesen werden kann. Zur Unterscheidung der Ausführungsbeispiele ist der Buchstabe a den Bezugszeichen des Ausführungsbeispiels in Fig. 1 bis 10 nachgestellt. In dem Ausführungsbeispiel der Fig. 11 ist der Buchstabe a durch den Buchstaben b ersetzt.

Die Figur 11 zeigt ein zweites Ausführungsbeispiel einer erfindungsgemäßen Flugzeugsitzanordnung. In der Figur 11 ist lediglich ein erstes Flugzeugsitzmodul 24b der Flugzeugsitzanordnung 10b gezeigt. Das Flugzeugsitzmodul 24b ist im Wesentlichen gleich ausgebildet wie das Flugzeugsitzmodul des ersten Ausführungsbeispiels. Das erste Flugzeugsitzmodul 24b begrenzt einen Flugzeugsitzbereich 26b. Das erste Flugzeugsitzmodul 24b weist einen Flugzeugsitz 34b auf. Der Flugzeugsitz 34b ist als ein Full-Flat-Sitz ausgebildet. Der Flugzeugsitz 34b ist dazu vorgesehen, in einem Winkel α von über 35 Grad in einer Flugzeugkabine 12b montiert zu werden. Der Flugzeugsitz 34b ist in einem Winkel α von 55 Grad in der Flugzeugkabine 12b montiert. Der Flugzeugsitz 34b weist eine Sitzrichtung 48b auf. Das erste Flugzeugsitzmodul 24b weist eine Umhausungseinheit 52b auf. Die Umhausungseinheit 52b ist dazu vorgesehen, den Flugzeugsitzbereich 26b des ersten Flugzeugsitzmoduls 24b zumindest teilweise zu begrenzen. Das erste Flugzeugsitzmodul 24b weist eine erste Konsoleneinheit 64b auf. Die erste Konsoleneinheit 64b ist an einer Innenseite 66b der Umhausungseinheit 52b des ersten Flugzeugsitzmoduls 24b angebracht. Das erste Flugzeugsitzmodul 24b weist eine Monitoreinheit 80b auf. Die Monitoreinheit 80b ist verschwenkbar an der Innenseite 66b der Umhausungseinheit 52b angebunden. Das erste Flugzeugsitzmodul 24b weist eine weitere Konsoleneinheit 90b auf. Die weitere Konsoleneinheit 90b ist frontal vor dem Flugzeugsitz 34b des ersten Flugzeugsitzmoduls 24b angeordnet.

Die weitere Konsoleneinheit 90b weist ein fixiertes Tischelement 96b auf. Das fixierte Tischelement 96b ist starr in dem Flugzeugsitzbereich 26b montiert. Das fixierte Tischelement 96b ist auf einer ersten Seite fest mit der Umhausungseinheit 52b des ersten Flugzeugsitzmoduls 24b verbunden. Im Unterschied zu dem vorherigen Ausführungsbeispiel weist das fixierte Tischelement 96b eine Vorderkante 102b auf, die nicht orthogonal zu der Sitzrichtung 48b ausgerichtet ist. Die Vorderkante 102b des Tischelements 96b ist schräg zu der Sitzrichtung 48b ausgerichtet. Das fixierte Tischelement 96b erstreckt sich in einem der Umhausungseinheit 52b zugewandten Bereich näher zu dem Flugzeugsitz 34b als in einem der Umhausungseinheit 52b abgewandten Bereich. Das Flugzeugsitzmodul 24b weist ein verstellbares Tischelement 110b auf. Das verstellbare Tischelement 110b ist linear verschiebbar zu der Umhausungseinheit 52b angeordnet. Das verstellbare Tischelement 110b ist unterhalb des fixierten Tischelements 96b angeordnet. Im Unterschied zu dem ersten Ausführungsbeispiel ragt das verstellbare Tischelement 110b in seiner Verstaustellung, insbesondere durch die schräg verlaufende Vorderkante 102b des fixierten Tischelements 96b, unter dem fixierten Tischelement 96b hervor. Ein Teilbereich des verstellbaren Tischelements 110b ist in der Verstaustellung nutzbar vor dem fixierten Tischelement 96b angeordnet.

**Bezugszeichen**

| | | | |
|---|---|---|---|
| 10 | Flugzeugsitzanordnung | 68 | Verstaumöglichkeit |
| 12 | Flugzeugkabine | 70 | Staufach |
| 14 | Bordwand | 72 | Staufach |
| 16 | Bordwand | 74 | Staufach |
| 18 | Flugzeugkabinenmittelachse | 76 | Funktionseinheit |
| 20 | Mittelgang | 78 | Funktionseinheit |
| 22 | Flugzeugsitzanordnung | 80 | Monitoreinheit |
| 24 | Flugzeugsitzmodul | 82 | Befestigungsgehäuse |
| 26 | Flugzeugsitzbereich | 84 | Bildschirm |
| 28 | Flugzeugsitzmodul | 86 | Rückseite |
| 30 | Flugzeugsitzbereich | 88 | Befestigungsmittel |
| 32 | Kabinenboden | 90 | Konsoleneinheit |
| 34 | Flugzeugsitz | 92 | Fußablagebereich |
| 36 | Sitzboden | 94 | Auflageelement |
| 38 | Rückenlehne | 96 | Tischelement |
| 40 | Beinstützelement | 98 | Tischfläche |
| 42 | Liegefläche | 100 | Befestigungsmittel |
| 44 | Kopfstützelement | 102 | Vorderkante |
| 46 | Mittelachse | 104 | Abstützelement |
| 48 | Sitzrichtung | 106 | Bodenelement |
| 50 | Fenster | 108 | Regalelement |
| 52 | Umhausungseinheit | 110 | Tischelement |
| 54 | Umhausungselement | 112 | Lagereinheit |
| 56 | Umhausungselement | 114 | Lagereinheit |
| 58 | Flugzeugsitz | 116 | Überbrückungselement |
| 60 | Umhausungseinheit | 118 | Aufbewahrungsbereich |
| 62 | Außenseite | 120 | Sitzbreite |
| 64 | Konsoleneinheit | 122 | Dreipunktgurteinheit |
| 66 | Innenseite | 124 | Schultergurt |
| 126 | Beckengurt | 138 | Hinterer Bereich |
| 128 | Türelement | 140 | Vorderer Bereich |
| 130 | Nutzbereich | | |
| 132 | Bordquerwand | X | Sitzabstand |
| 134 | Umhausungselement | | |
| 136 | Verstaubereich | | |

## Patentansprüche

1. Flugzeugsitzanordnung mit einem ersten Flugzeugsitzmodul (24), das einen Flugzeugsitzbereich (26) begrenzt, wobei das Flugzeugsitzmodul (24) einen Flugzeugsitz (34) aufweist, der dazu vorgesehen ist, in einem Winkel α von über 30 Grad in der Flugzeugkabine (12) montiert zu werden, von einem Mittelgang (20) weg auf ein Fenster (50) einer Flugzeugkabine (12) ausgerichtet zu sein und eine zumindest im Wesentlichen ebene Liegefläche (42) auszubilden, wobei das Flugzeugsitzmodul (24) zumindest eine Umhausungseinheit (52) aufweist, die den Flugzeugsitzbereich (26) zumindest teilweise begrenzt, und mit zumindest einem weiteren Flugzeugsitzmodul (28), das unmittelbar benachbart zu dem ersten Flugzeugsitzmodul (24) angeordnet ist und das einen weiteren Flugzeugsitzbereich (30) begrenzt, wobei das weitere Flugzeugsitzmodul (28) ebenfalls eine Umhausungseinheit (60) aufweist, die den Flugzeugsitzbereich (30) zumindest teilweise begrenzt, wobei die Umhausungseinheit (60) des weiteren Flugzeugsitzmoduls (28) im Wesentlichen gleich ausgebildet ist wie die Umhausungseinheit (52) des ersten Flugzeugsitzmoduls (24) und den Flugzeugsitzbereich (26) des ersten Flugzeugsitzmoduls (24) von dem Flugzeugsitzbereich (30) des zweiten Flugzeugsitzmoduls (28) abtrennt,
wobei die Umhausungseinheit (52) den Flugzeugsitzbereich (26) zumindest teilweise von einem restlichen Kabinenbereich abtrennt,
**dadurch gekennzeichnet, dass**
die Umhausungseinheit (52) wenigstens ein Umhausungselement (54) aufweist, das zumindest in einem Bereich vor dem Flugzeugsitz (34) parallel zu einer Sitzrichtung (48) des Flugzeugsitzes (34) verläuft und dazu vorgesehen ist, sich mit einem gangentfernten Ende zumindest bis kurz vor eine Bordwand (14) zu erstrecken.

2. Flugzeugsitzanordnung nach Anspruch 1, **dadurch gekennzeichnet, dass** das Flugzeugsitzmodul (24) eine Konsoleneinheit (64) aufweist, die zumindest eine Verstaumöglichkeit (68) ausbildet, die an einer Innenseite (66) der Umhausungseinheit (52) des ersten Flugzeugsitzmoduls (24), in einem Bereich vor dem Flugzeugsitz (34), angebunden ist.

3. Flugzeugsitzanordnung nach einem der vorhergehenden Ansprüche, **dadurch gekennzeichnet, dass** das Flugzeugsitzmodul (24) eine weitere Konsoleneinheit (90) aufweist, die frontal vor dem Flugzeugsitz (34) angeordnet ist und zumindest einen Fußablagebereich (92) und/oder ein fixiertes Tischelement (96) aufweist.

4. Flugzeugsitzanordnung nach Anspruch 3, **dadurch gekennzeichnet, dass** die weitere Konsoleneinheit (90) an der Umhausungseinheit (60) des ersten Flugzeugsitzmoduls (24) angebunden ist und sich bis kurz vor einer Außenseite (62) der Umhausungseinheit (60) des zweiten Flugzeugsitzmoduls (28) erstreckt.

5. Flugzeugsitzanordnung nach Anspruch 4, **dadurch gekennzeichnet, dass** das Flugzeugsitzmodul (24) ein Regalelement (108) aufweist, das an der Außenseite (62) der Umhausungseinheit (60) des zweiten Flugzeugsitzmoduls (28) angebunden ist und einen Spalt zwischen der Umhausungseinheit (60) und der weiteren Konsoleneinheit (90), insbesondere dem fixierten Tischelement (96), überbrückt.

6. Flugzeugsitzanordnung zumindest nach Anspruch 3, **dadurch gekennzeichnet, dass** die weitere Konsoleneinheit (90) in einer Draufsicht im Wesentlichen als ein Parallelogramm oder ein Dreieck ausgebildet ist.

7. Flugzeugsitzanordnung zumindest nach Anspruch 3, **dadurch gekennzeichnet, dass** die weitere Konsoleneinheit (90) ein Abstützelement (104) aufweist, das zumindest das fixierte Tischelement (96) an einer der Umhausungseinheit (52) des ersten Flugzeugsitzmoduls (24) abgewandten Seite abstützt.

8. Flugzeugsitzanordnung nach einem der vorhergehenden Ansprüche, **dadurch gekennzeichnet, dass** das Flugzeugsitzmodul (24) ein verstellbares Tischelement (110) aufweist, das linear verschiebbar an der Innenseite (66) der Umhausungseinheit (52) angebunden ist und parallel zur Sitzrichtung (48) zwischen einer Verstaustellung und einer Gebrauchsstellung verschiebbar ist.

9. Flugzeugsitzanordnung nach Anspruch 3 und 7, **dadurch gekennzeichnet, dass** das verstellbare Tischelement (110) an einer Unterseite des fixierten Tischelements (96) angeordnet ist und über zumindest eine Lagereinheit (112, 114) an dem fixierten Tischelement (90) befestigt ist.

10. Flugzeugsitzanordnung nach Anspruch 3, **dadurch gekennzeichnet, dass** das fixierte Tischelement (90) eine Vorderkante (102) aufweist, die orthogonal zu der Sitzrichtung (48) des Flugzeugsitzes (34) ausgerichtet ist.

11. Flugzeugsitzanordnung nach einem der vorhergehenden Ansprüche, **dadurch gekennzeichnet, dass** das Flugzeugsitzmodul (24) eine Monitoreinheit (80) aufweist, die verschwenkbar an der Innenseite (66) der Umhausungseinheit (52) angebunden ist.

12. Flugzeugsitzanordnung nach Anspruch 11, **dadurch gekennzeichnet, dass** auf einer Rückseite (86) der Monitoreinheit (80) zumindest ein Befestigungsmittel (88) zur Verstauung von Utensilien angeordnet ist.

13. Flugzeugsitzanordnung nach Anspruch 3, **dadurch gekennzeichnet, dass** das erste Flugzeugsitzmodul (24) zumindest ein Überbrückungselement (116) aufweist, das in einem montierten Zustand einen Spalt zwischen der weiteren Konsoleneinheit (90) und der Umhausungseinheit (60) des zweiten Flugzeugsitzmoduls (28) schließt.

14. Flugzeugkabine mit einem einzelner Mittelgang (20) und einer ersten Flugzeugsitzanordnung (10) nach einem der vorhergehenden Ansprüche mit mehreren Flugzeugsitzmodulen (24, 26), die zwischen dem Mittelgang (20) und einer ersten Bordwand (14) angeordnet ist, und mit einer zweiten Flugzeugsitzanordnung (22) mit mehreren Flugzeugsitzmodulen, die zwischen dem Mittelgang (20) und einer zweiten, Bordwand (16) angeordnet ist.

15. Flugzeugkabine nach Anspruch 14, **dadurch gekennzeichnet, dass** die Flugzeugsitzmodule (24, 26) jeweils einen Flugzeugsitz (34, 58) aufweisen, die in einem Winkel α von 35 - 80 Grad auf die Bordwand ausgerichtet sind.

## Claims

1. An aircraft seat arrangement with a first aircraft seat module (24) which delimits an aircraft seat region (26), the aircaraft seat module (24) comprising an aircraft seat (34) which is configured to be mounted in the aircraft cabin (12) at an angle α of more than 30 degrees, to be oriented away from a central aisle (20) towards a window (50) of an aircraft cabin (12) and to form an at least substantially planar lying-down surface (42), wherein the aircraft seat module (24) comprises at least one enclosure unit (52) which delimits the aircraft seat region (26) at least partially, and with at least one further aircraft seat module (28) which is arranged directly neighboring the first aircraft seat module (24) and delimits a further aircraft seat region (30), wherein the further aircraft seat module (28) also comprises an enclosure unit (60) which delimits the aircraft seat region (30) at least partially, wherein the enclosure unit (60) of the further aircraft seat module (28) is realized substantially identically to the enclosure unit (52) of the first aircraft seat module (24) and separates the aircraft seat region (26) of the first aircraft seat module (24) from the aircraft seat region (30) of the second aircraft seat module (28),
wherein the enclosure unit (52) at least partly separates the aircraft seat region (26) from a remaining cabin area,
**characterized in that**
the enclosure unit (52) comprises at least one enclosure element (54) which extends, at least in a region in front of the aircraft seat (34), parallel to a sitting direction (48) of the aircraft seat (34) and is configured to extend, with an end that is away from the aisle, at least as far as shortly in front of a side wall (14).

2. The aircraft seat arrangement according to claim 1, **characterized in that** the aircraft seat module (24) comprises a console unit (64), which forms at least one stowage facility (68) that is connected to an inner face (66) of the enclosure unit (52) of the first aircraft seat module (24), in a region in front of the aircraft seat (34).

3. The aircraft seat arrangement according to any one of the preceding claims, **characterized in that** the aircraft seat module (24) comprises a further console unit (90), which is arranged frontally in front of the aircraft seat (34) and comprises at least a footrest region (92) and/or a fixed table element (96).

4. The aircraft seat arrangement according to claim 3, **characterized in that** the further console unit (90) is connected to the enclosure unit (52) of the first aircraft seat module (24) and extends as far as shortly in front of an outer face (62) of the enclosure unit (60) of the second aircraft seat module (28).

5. The aircraft seat arrangement according to claim 4, **characterized in that** the aircraft seat module (24) comprises a shelf element (108), which is connected to the outer face (62) of the enclosure unit (60) of the second aircraft seat module (28) and bridges a gap between the enclosure unit (60) and the further console unit (90), in particular the fixed table element (96).

6. The aircraft seat arrangement according to claim 3, **characterized in that** in a plan view, the further console unit (90) is realized substantially as a parallelogram or as a triangle.

7. The aircraft seat arrangement at least according to claim 3, **characterized in that** the further console unit (90) comprises a bracing element (104) which supports at least the fixed table element (96) on a side that faces away from the enclosure unit (52) of the first aircraft seat module (24).

8. The aircraft seat arrangement according to any one of the preceding claims, **characterized in that** the aircraft seat module (24) comprises an adjustable table element (110), which is connected to the inner face (66) of the enclosure unit (52) in a linearly displaceable manner, and is displaceable parallel to the sitting direction (48) between a stowage position and a usage position.

9. The aircraft seat arrangement according to claims 3 and 7, **characterized in that** the adjustable table element (110) is arranged at an underside of the fixed table element (96) and is fastened to the fixed table element (96) via at least one bearing unit (112, 114).

10. The aircraft seat arrangement according to claim 3, **characterized in that** the fixed table element (96) has a front edge (102) which is aligned orthogonally to the sitting direction (48) of the aircraft seat (34).

11. The aircraft seat arrangement according to any one of the preceding claims, **characterized in that** the aircraft seat module (24) comprises a monitor unit (80), which is connected to the inner face (66) of the enclosure unit (52) in a pivotable manner.

12. The aircraft seat arrangement according to claim 11, **characterized in that** at least one fixing means (88) for a stowage of utensils is arranged on a rear side (86) of the monitor unit (80).

13. The aircraft seat arrangement according to claim 3, **characterized in that** the first aircraft seat module (24) comprises at least one bridge element (116), which in a mounted state closes a gap between the further console unit (90) and the enclosure unit (60) of the second aircraft seat module (28).

14. An aircraft cabin with a single central aisle (20) and with a first aircraft seat arrangement (10) according to any one of the preceding claims, comprising several aircraft seat modules (24, 26), which is arranged between the central aisle (20) and a first side wall (14), and with a second aircraft seat arrangement (22) comprising several aircraft seat modules, which is arranged between the central aisle (20) and a second side wall (16).

15. The aircraft cabin according to claim 14, **characterized in that** the aircraft seat modules (24, 26) each comprise an aircraft seat (34, 58), said aircraft seats (34, 58) being oriented towards the side wall at an angle α of 35 - 80 degrees.

## Revendications

1. Agencement de siège d'avion comprenant un premier module de siège d'avion (24) qui délimite une zone de siège d'avion (26), le module de siège d'avion (24) présentant un siège d'avion (34) qui est prévu pour être monté dans la cabine d'avion (12) selon un angle α supérieur à 30 degrés, pour être orienté à l'écart d'une passerelle centrale (20) sur une fenêtre (50) d'une cabine d'avion (12) et pour former une surface de couchage (42) au moins sensiblement plane, le module de siège d'avion (24) présentant au moins une unité de logement (52) qui délimite au moins en partie la zone de siège d'avion (26), et comprenant au moins un module de siège d'avion supplémentaire (28) qui est disposé directement à côté du premier module de siège d'avion (24) et qui délimite une zone de siège d'avion supplémentaire (30), le module de siège d'avion supplémentaire (28) présentant également une unité de logement (60) qui délimite au moins en partie la zone de siège d'avion (30), l'unité de logement (60) du module de siège d'avion supplémentaire (28) étant réalisée sensiblement de la même manière que l'unité de logement (52) du premier module de siège d'avion (24) et séparant la zone de siège d'avion (26) du premier module de siège d'avion (24) de la zone de siège d'avion (30) du deuxième module de siège d'avion (28),
l'unité de logement (52) séparant au moins en partie la zone de siège d'avion (26) d'une zone de cabine restante,
**caractérisé en ce que** l'unité de logement (52) présente au moins un élément de logement (54) qui s'étend au moins dans une zone devant le siège d'avion (34) parallèlement à une direction de siège (48) du siège d'avion (34) et qui est prévu pour s'étendre avec une extrémité éloignée de la passerelle au moins jusqu'à peu devant une paroi latérale (14).

2. Agencement de siège d'avion selon la revendication 1, **caractérisé en ce que** le module de siège d'avion (24) présente une unité de console (64) qui forme au moins une possibilité de rangement (68) qui est reliée à un côté intérieur (66) de l'unité de logement (52) du premier module de siège d'avion (24), dans une zone devant le siège d'avion (34).

3. Agencement de siège d'avion selon l'une quelconque des revendications précédentes, **caractérisé en ce que** le module de siège d'avion (24) présente une unité de console supplémentaire (90) qui est disposée frontalement devant le siège d'avion (34) et présente au moins une zone de repose-pieds (92) et/ou un élément de table fixé (96).

4. Agencement de siège d'avion selon la revendication 3, **caractérisé en ce que** l'unité de console supplémentaire (90) est reliée à l'unité de logement (52) du premier module de siège d'avion (24) et s'étend jusqu'à peu devant un côté extérieur (62) de l'unité de logement (60) du deuxième module de siège d'avion (28).

5. Agencement de siège d'avion selon la revendication 4, **caractérisé en ce que** le module de siège d'avion (24) présente un élément d'étagère (108) qui est relié au côté extérieur (62) de l'unité de logement (60) du deuxième module de siège d'avion (28) et comble une fente entre l'unité de logement (60) et l'unité de console supplémentaire (90), en particulier l'élément de table fixé (96).

6. Agencement de siège d'avion au moins selon la revendication 3, **caractérisé en ce que** l'unité de console supplémentaire (90) est réalisée dans une vue de dessus sensiblement sous forme de parallélogramme ou de triangle.

7. Agencement de siège d'avion au moins selon la revendication 3, **caractérisé en ce que** l'unité de console supplémentaire (90) présente un élément de support (104) qui supporte au moins l'élément de table fixé (96) sur un côté opposé à l'unité de logement (52) du premier module de siège d'avion (24).

8. Agencement de siège d'avion selon l'une quelconque des revendications précédentes, **caractérisé en ce que** le module de siège d'avion (24) présente un élément de table réglable (110) qui est relié de manière déplaçable linéairement au côté intérieur (66) de l'unité de logement (52) et qui est déplaçable parallèlement à la direction de siège (48) entre une position de rangement et une position d'utilisation.

9. Agencement de siège d'avion selon les revendications 3 et 7, **caractérisé en ce que** l'élément de table réglable (110) est disposé sur un côté inférieur de l'élément de table fixé (96) et est fixé par le biais d'au moins une unité de palier (112, 114) à l'élément de table fixé (96).

10. Agencement de siège d'avion selon la revendication 3, **caractérisé en ce que** l'élément de table fixé (96) présente un bord avant (102) qui est orienté orthogonalement à la direction de siège (48) du siège d'avion (34).

11. Agencement de siège d'avion selon l'une quelconque des revendications précédentes, **caractérisé en ce que** le module de siège d'avion (24) présente une unité de moniteur (80) qui est reliée de manière pivotante au côté intérieur (66) de l'unité de logement (52).

12. Agencement de siège d'avion selon la revendication 11, **caractérisé en ce qu'**au moins un moyen de fixation (88) pour le rangement d'ustensiles est disposé sur un côté arrière (86) de l'unité de moniteur (80).

13. Agencement de siège d'avion selon la revendication 3, **caractérisé en ce que** le premier module de siège d'avion (24) présente au moins un élément de pontage (116) qui ferme dans un état monté une fente entre l'unité de console supplémentaire (90) et l'unité de logement (60) du deuxième module de siège d'avion (28).

14. Cabine d'avion comprenant une seule passerelle centrale (20) et un premier agencement de siège d'avion (10) selon l'une quelconque des revendications précédentes, comprenant plusieurs modules de siège d'avion (24, 26) qui sont disposés entre la passerelle centrale (20) et une première paroi latérale (14), et comprenant un deuxième agencement de siège d'avion (22) comprenant plusieurs modules de siège d'avion qui sont disposés entre la passerelle centrale (20) et une deuxième paroi latérale (16).

15. Cabine d'avion selon la revendication 14, **caractérisée en ce que** les modules de siège d'avion (24, 26) présentent à chaque fois un siège d'avion (34, 58) qui sont orientés selon un angle α de 35 à 80 degrés sur la paroi latérale.
